# EUROPÄISCHE PATENTSCHRIFT

(11) **EP 3 774 469 B1**
(45) Veröffentlichungstag und Bekanntmachung des Hinweises auf die Patenterteilung: **12.07.2023**
(21) Anmeldenummer: 19720051.2
(22) Anmeldetag: 22.03.2019
(51) Int. Cl.: B60T 17/22, B60T 13/68, B60T 8/94, B60T 8/32

(54) **ELEKTROPNEUMATISCHER ZWEIKANALACHSMODULATOR MIT EINEM KANAL FÜR DIE VORDERACHSE UND EINEM KANAL FÜR DIE HINTERACHSE**
ELECTRO-PNEUMATIC TWO-CHANNEL AXLE MODULATOR HAVING A CHANNEL FOR THE FRONT AXLE AND A CHANNEL FOR THE REAR AXLE
MODULATEUR D'ESSIEU ÉLECTROPNEUMATIQUE À DEUX CANAUX POURVU D'UN CANAL POUR L'ESSIEU AVANT ET D'UN CANAL POUR L'ESSIEU ARRIÈRE

(30) Priorität: 05.04.2018 DE 102018108092
(43) Veröffentlichungstag der Anmeldung: 17.02.2021
(73) Patentinhaber: ZF CV Systems Europe BV, 1170 Brussels (BE)
(72) Erfinder: VAN THIEL, Julian, 30938 Großburgwedel (DE)
(74) Vertreter: Rabe, Dirk-Heinrich
(86) Internationale Anmeldenummer: PCT/EP2019/057315
(87) Internationale Veröffentlichungsnummer: WO 2019/192861

(56) Entgegenhaltungen:
- EP-A1- 1 122 142
- EP-A2- 1 069 015
- WO-A2-2010/094481
- DE-A1- 3 545 021
- DE-A1- 10 036 287

## Beschreibung

Die Erfindung betrifft einen elektropneumatischen Zweikanalachsmodulator für Nutzfahrzeuge mit einem ersten Vorratsanschluss zum Anschließen eines ersten Druckluftvorrats und einem zweiten Vorratsanschluss zum Anschließen eines zweiten Druckluftvorrats, einem Vorderachskanalanschluss, einem Hinterachskanalanschluss, einer elektropneumatischen Vorderachsventilanordnung, die mit dem ersten Vorratsanschluss zum Aussteuern eines Vorderachsbremsdrucks an dem Vorderachskanalanschluss verbunden ist, und einer elektropneumatischen Hinterachsventilanordnung, die mit dem zweiten Vorratsanschluss zum Aussteuern eines Hinterachsbremsdruckes an dem Hinterachskanalanschluss verbunden ist.

Zweikanalachsmodulatoren der eingangs genannten Art werden in Nutzfahrzeugen dazu eingesetzt, eine Bremsanforderung in Bremsdrücke für zwei Achsen, insbesondere die Vorderachse und die Hinterachse bzw. Hinterachsen umzusetzen. Die Bremsdrücke für die Vorder- und Hinterachse unterscheiden sich häufig, um ein stabiles Abbremsen des Fahrzeugs zu erreichen. Werden sowohl die Vorderachse als auch die Hinterachse von einem gemeinsamen pneumatischen Kreis aus gespeist, besteht die Gefahr, dass bei einem einfachen Fehler im Bremssystem das Fahrzeug nicht mehr gebremst werden kann. Zu diesem Zweck ist es im Stand der Technik bekannt, die Betriebsbremse zweikreisig auszulegen. Allgemein wird dabei ein Vorderachsbremskreis und ein Hinterachsbremskreis bereitgestellt. Bei einem Fehler in einem der Kreise kann also noch über den jeweils anderen Bremskreis eine ausreichende Verzögerung ausgesteuert werden. Aus WO 2010/094481 A2 ist ein elektropneumatisches Druckregelmodul mit pneumatisch kreisgetrennten Druckregelkanälen bekannt, bei dem für die Vorderachse und die Hinterachse zwei vollständig getrennte pneumatische Kreise verwendet werden. Dazu wird jedem Druckregelkanal wenigstens ein eigener, an einen eigenen Druckluftvorrat anschließbarer Vorratsdruckanschluss zugeordnet, wobei die pneumatischen Strömungswege eines jeden Druckregelkanals zumindest ausgehend von dem jeweiligen Vorratsdruckanschluss bis zu dem jeweiligen Arbeitsdruckanschluss von den pneumatischen Strömungswegen eines jeden jeweils anderen Druckregelkanals pneumatisch getrennt ausgebildet sind. Auf diese Weise sollen zwei vollständig unabhängige Druckregelkreise erhalten werden, sodass beispielsweise bei Ausfall des ersten Druckregelkreises der zweite Druckregelkreis immer noch die ihm zugeordnete Achse korrekt abbremsen kann.

Nachteilig hieran ist, dass bei Ausfall eines Vorratsdruckes auch der pneumatische Redundanzdruck nicht mehr für die Druckaussteuerung des jeweiligen Kanals verwendet werden kann. Andererseits offenbart DE10036287A1 ein Verfahren zur Steuerung von Radbremsen in einem elektrischen Bremssystem eines Kraftfahrzeugs, wobei Ansteuersignale für Ventilanordnungen zur Steuerung des Bremsdrucks in einer ersten Gruppen von Radbremsen aus einem ersten Energiekreis, einer zweiten Gruppen von Radbremsen aus einem zweiten, vom ersten unabhängigen Energiekreis gebildet werden, wobei ein Fehler im Bereich der Ventilanordnungen, der Druckversorgung und/oder der Elektrik des Bremssystems ermittelt wird.

DE3545021 A1 offenbart eine elektro-pneumatische Bremsanlage für mit Anhänger koppelbare Zugfahrzeuge, mit zwei voneinander unabhängig wirkenden, mittels eines Bremspedals ansteuerbaren Betätigungskreisen zum Steuern wenigstens eines Druckluftversorgungskreises zu mehreren Radbremszylindern, wobei mindestens ein Betätigungskreis ein elektrischer ist und eine an einer Spannungsquelle angeschlossene Steuerelektronik und einen mit dem Bremspedal gekoppelten Bremswertgeber aufweist.

Aufgabe der vorliegenden Erfindung ist es daher, einen elektropneumatischen Zweikanalachsmodulator für Nutzfahrzeuge anzugeben, der eine redundante Ansteuerung erlaubt und vorzugsweise bauraumoptimiert aufgebaut ist.

Diese Aufgabe wird bei einem elektropneumatischen Zweikanalachsmodulator der eingangs genannten Art dadurch gelöst, dass eine erste Redundanzventilanordnung vorgesehen ist, die mit dem zweiten Vorratsanschluss zum Aussteuern eines redundanten Vorderachsbremsdrucks an dem Vorderachskanalanschluss verbunden ist. Die erste Redundanzventilanordnung ist erfindungsgemäß mit dem zweiten Vorratsanschluss verbunden, der im Normalbetrieb dazu dient, den Hinterachsbremsdruck an dem Hinterachskanalanschluss auszusteuern. Das heißt, im Redundanzfall wird erfindungsgemäß der Vorratsdruck, der im Normalbetrieb für die Hinterachse vorgesehen ist, für die Aussteuerung des redundanten Vorderachsbremsdrucks an dem Vorderachskanalanschluss verwendet. Die Erfindung kehrt sich also von der vollständigen Trennung des Vorderachskreises und des Hinterachskreises, wie es im Stand der Technik vorgeschlagen wird, ab. Die Erfinder der vorliegenden Erfindung haben festgestellt, dass durch eine vollständige Trennung der Vorderachs- und Hinterachskreise zwar eine gute Sicherheit erzielt werden kann, es aber um gleichzeitig eine redundante Ansteuerung der jeweils ausgefallenen Achse zu erreichen, einer Aufhebung des Prinzips bedarf. Insbesondere lässt sich eine besonders vorteilhafte redundante Ansteuerung dann erzielen, wenn eine Überkreuzschaltung der Vorratsanschlüsse vorgenommen wird.

In diesem Sinne ist es bevorzugt, wenn eine zweite Redundanzventilanordnung vorgesehen ist, die mit dem ersten Vorratsanschluss zum Aussteuern eines redundanten Hinterachsbremsdrucks an dem Hinterachskanalanschluss verbunden ist. Während also der erste Vorratsanschluss im Normalbetrieb zum Aussteuern des Vorderachsbremsdrucks und der zweite Vorratsanschluss im Normalbetrieb zum Aussteuern des Hinterachsbremsdrucks dient, wird diese Zuordnung im Redundanzfall umgekehrt. Das heißt, im Redundanzfall wird der zweite Vorratsanschluss zum Aussteuern des redundanten Vorderachsbremsdrucks und der erste Vorratsanschluss zum Aussteuern eines redundanten Hinterachsbremsdrucks verwendet.

Es ist also möglich, für den Fall, dass beispielsweise der erste vom ersten Vorratsanschluss gespeiste Kreis ausfällt, den Vorderachsbremsdruck redundant mittels des vom zweiten Vorratsanschluss bereitgestellten Drucks für den zweiten Kreis auszusteuern. In identischer Weise kann bei Ausfall des durch den zweiten Vorratsanschluss gespeisten zweiten Kreises der Hinterachsbremsdruck redundant ausgesteuert werden, indem der am ersten Vorratsanschluss bereitgestellte Vorratsdruck verwendet wird.

Auf diese Weise wird eine vollständige Überkreuzschaltung der Vorratsanschlüsse erreicht, und die pneumatischen Kreise für die Vorder- und die Hinterachse sind vollständig über Kreuz verschaltet.

Erfindungsgemäß weist der elektropneumatische Zweikanalachsmodulator einen ersten Redundanzanschluss zum Empfangen eines ersten Redundanzdrucks auf, der wenigstens mit der ersten Redundanzventilanordnung verbunden ist. Der erste Redundanzanschluss kann darüber hinaus auch mit der zweiten Redundanzventilanordnung verbunden sein. In dem zweitgenannten Fall wird der am Redundanzanschluss bereitgestellte erste Redundanzdruck auf sowohl die erste als auch die zweite Redundanzventilanordnung aufgeteilt, und je nachdem, welcher der Kreise ausgefallen ist, dann als redundanter Vorderachsbremsdruck oder redundanter Hinterachsbremsdruck ausgesteuert.

Der erste Redundanzdruck wird vorzugsweise von einem pneumatischen Bremswertgeber, insbesondere einem pneumatischen Bremspedal, bereitgestellt. Hat dieses pneumatische Bremspedal nur einen einzigen pneumatischen Anschluss, wird dieser vorzugsweise mit dem ersten Redundanzanschluss verbunden, der dann in diesem Fall der einzige Redundanzanschluss sein kann.

Je nach Gestaltung kann es auch vorteilhaft sein, dass der elektropneumatische Zweikanalachsmodulator einen zweiten Redundanzanschluss zum Empfangen eines zweiten Redundanzdrucks aufweist. Der zweite Redundanzanschluss ist dann mit der zweiten Redundanzventilanordnung verbunden. In diesem Fall sind die beiden Redundanzanschlüsse, der erste Redundanzanschluss und der zweite Redundanzanschluss, getrennt voneinander, und der erste Redundanzdruck und der zweite Redundanzdruck werden separat ausgesteuert. Über den ersten Redundanzdruck kann dann der redundante Vorderachsbremsdruck ausgesteuert werden, während über den zweiten Redundanzdruck der redundante Hinterachsbremsdruck ausgesteuert werden kann.

Gemäß einer weiteren bevorzugten Ausführungsform weist die elektropneumatische Vorderachsventilanordnung eine Vorderachs-Vorsteuereinheit mit einem Vorderachseinlassventil zum Aussteuern eines ersten Vorderachssteuerdrucks und einem Vorderachsauslassventil auf, und die elektropneumatische Hinterachsventilanordnung weist eine Hinterachs-Vorsteuereinheit mit einem Hinterachseinlassventil zum Aussteuern eines ersten Hinterachssteuerdrucks und einem Hinterachsauslassventil auf. Die Vorderachs-Vorsteuereinheit kann darüber hinaus vorzugsweise einen zweiten Vorderachssteuerdruck aussteuern, und die Hinterachs-Vorsteuereinheit kann vorzugsweise einen zweiten Hinterachssteuerdruck aussteuern. Die ersten und zweiten Vorderachssteuerdrücke und ersten und zweiten Hinterachssteuerdrücke werden vorzugsweise entsprechend den pneumatischen Ventilen ausgesteuert, die dann zum Be- bzw. Entlüften des Vorderachskanalanschlusses und des Hinterachskanalanschlusses mit diesen verbindbar sind.

Erfindungsgemäß ist vorgesehen, dass die erste Redundanzventilanordnung ein mit dem ersten Redundanzanschluss verbundenes erstes elektropneumatisches Redundanzventil und ein erstes Redundanz-Relaisventil aufweist. Das erste elektropneumatische Redundanzventil ist vorzugsweise in einem bestromten Zustand geschlossen und in einem stromlosen Zustand offen, sodass der erste Redundanzdruck durch das erste elektropneumatische Redundanzventil durchgesteuert werden kann. Das erste elektropneumatische Redundanzventil dient also dazu, den ersten Redundanzdruck im Normalbetrieb auszusperren. Für den Fehlerfall wird das erste elektropneumatische Redundanzventil vorzugsweise stromlos geschaltet, sodass der erste Redundanzdruck durchgesteuert werden kann. Das erste Redundanz-Relaisventil dient vorzugsweise dazu, den redundanten Vorderachsbremsdruck auszusteuern. Ein Relaisventil wird im Allgemeinen pneumatisch gesteuert, sodass dieses auch im stromlosen Zustand betreibbar ist. In dieser Ausführungsform ist weiterhin vorteilhaft, dass ein separates Relaisventil als erstes Redundanz-Relaisventil verwendet wird, das in diesem Fall ausschließlich zur Aussteuerung des redundanten Vorderachsbremsdrucks verwendet wird, sodass das erste Redundanz-Relaisventil einfach und kostengünstig ausgestaltet werden kann. Es ist nicht erforderlich, dass dieses Ventil eine Vielzahl von Schaltzyklen aushalten kann.

Für den Fall, dass der elektropneumatische Zweikanalachsmodulator eine zweite Redundanzventilanordnung aufweist, weist diese vorzugsweise ein zweites Redundanz-Relaisventil auf. Das zweite Redundanz-Relaisventil wird dann vorzugsweise dazu verwendet, den redundanten Hinterachsbremsdruck auszusteuern. Das erste und das zweite Redundanz-Relaisventil können identisch ausgestaltet sein, und insbesondere kostengünstig und einfach.

Weiterhin ist vorzugsweise für den Fall, dass ein zweiter Redundanzanschluss vorhanden ist, vorgesehen, dass die zweite Redundanzventilanordnung ein mit dem zweiten Redundanzanschluss verbundenes zweites elektropneumatisches Redundanzventil aufweist. Das zweite elektropneumatische Redundanzventil dient dann dazu, den zweiten Redundanzdruck auszusperren und gegebenenfalls im Fehlerfall an das zweite Redundanz-Relaisventil durchzusteuern. Ist nur ein Redundanzanschluss vorgesehen, wird der dort anliegende Redundanzdruck vorzugsweise sowohl an das erste Redundanz-Relaisventil als auch an das zweite Redundanz-Relaisventil weitergegeben.

Bevorzugt ist, dass das erste Redundanz-Relaisventil einen mit dem zweiten Vorratsanschluss verbundenen Redundanz-Relaisventil-Vorratsanschluss, einen mit einer Entlüftung verbundenen ersten Redundanz-Relaisventil-Entlüftungsanschluss, einen mit dem Vorderachskanalanschluss verbindbaren ersten Redundanz-Relaisventil-Arbeitsanschluss und einen mit dem ersten elektropneumatischen Redundanzventil verbundenen ersten Redundanz-Relaisventil-Steueranschluss aufweist.

Der Begriff "verbindbar" bedeutet in dem vorliegenden Zusammenhang, dass zwischen dem Vorderachskanalanschluss und dem ersten Redundanz-Relaisventil-Arbeitsanschluss ein weiteres Ventil vorgesehen sein kann, sodass, wenn dieses weitere Ventil geschlossen ist, der Vorderachskanalanschluss und der erste Redundanz-Relaisventil-Arbeitsanschluss getrennt sind.

In übereinstimmender Weise ist vorzugsweise vorgesehen, dass das zweite Redundanz-Relaisventil einen mit dem ersten Vorratsanschluss verbundenen zweiten Redundanz-Relaisventil-Vorratsanschluss, einen mit einer Entlüftung verbundenen zweiten Redundanz-Relaisventil-Entlüftungsanschluss, einen mit dem Hinterachskanalanschluss verbindbaren zweiten Redundanz-Relaisventil-Arbeitsanschluss und einen mit dem ersten elektropneumatischen Redundanzventil oder dem zweiten elektropneumatischen Redundanzventil verbundenen zweiten Redundanz-Relaisventil-Steueranschluss aufweist. Für den Fall, dass der elektropneumatische Zweikanalachsmodulator nur einen ersten Redundanzanschluss aufweist und folglich nur ein erstes elektropneumatisches Redundanzventil aufweist, ist der zweite Redundanz-Relaisventil-Steueranschluss mit diesem verbunden. In diese Ausführungsform kann auch vorgesehen sein, dass nur ein einziger Redundanzanschluss vorgesehen ist, an dem dann aber sowohl ein erstes als auch ein zweites elektropneumatisches Redundanzventil angeschlossen sind. In diesem Fall ist dann bevorzugt, dass der zweite Redundanz-Relaisventil-Steueranschluss mit dem zweiten elektropneumatischen Redundanzventil verbunden ist.

Um die Steuerdrücke der Vorderachs-Vorsteuereinheit und der Hinterachs-Vorsteuereinheit umzusetzen, ist bevorzugt vorgesehen, dass die elektropneumatische Vorderachsventilanordnung eine mit dem ersten Vorratsanschluss verbundene pneumatische Vorderachs-Hauptventilanordnung aufweist, die den ersten Vorderachssteuerdruck empfängt und dazu ausgebildet ist, basierend auf dem empfangenen ersten Vorderachssteuerdruck den Vorderachsbremsdruck an dem Vorderachskanalanschluss anzusteuern. Ferner weist die elektropneumatische Hinterachsventilanordnung vorzugsweise eine mit dem zweiten Vorratsanschluss verbundene pneumatische Hinterachs-Hauptventilanordnung auf, die den ersten Hinterachssteuerdruck empfängt und dazu ausgebildet ist, basierend auf dem empfangenen ersten Hinterachssteuerdruck den Hinterachsbremsdruck an dem Hinterachskanalanschluss auszusteuern. Das heißt, im Normalbetrieb, also nicht im Redundanzfall, werden über den ersten Vorderachssteuerdruck und den ersten Hinterachssteuerdruck der Vorderachsbremsdruck und der Hinterachsbremsdruck ausgesteuert.

Besonders vorteilhaft ist dabei, wenn die Vorderachs-Hauptventilanordnung mit dem ersten Redundanz-Relaisventil zum Entlüften des Vorderachskanalanschlusses verbunden ist. Das heißt, das erste Redundanz-Relaisventil wird vorzugsweise sowohl im Normalbetrieb als auch im Redundanzbetrieb zur Entlüftung des Vorderachskanalanschlusses verwendet. Mit anderen Worten, ein Entlüftungspfad für den Vorderachskanalanschluss wird auch zur Aussteuerung (Belüftung) des redundanten Vorderachsbremsdrucks verwendet. Dies ist vorteilhaft, da Ventile üblicherweise so ausgelegt sind, dass sie im Redundanzfall den Vorderachskanalanschluss entlüften, um im Redundanzfall nicht automatisch einen Bremsdruck auszusteuern, sondern den Vorderachskanalanschluss freizugeben. Der dann offene Vorderachskanalanschluss kann vorteilhaft dazu verwendet werden, den redundanten Vorderachsbremsdruck mittels des ersten Redundanz-Relaisventils auszusteuern.

In übereinstimmender Weise ist vorzugsweise weiterhin vorgesehen, dass die Hinterachs-Hauptventilanordnung mit dem zweiten Redundanz-Relaisventil zum Entlüften des Hinterachskanalanschlusses verbunden ist. Das zweite Redundanz-Relaisventil wird demnach vorzugsweise sowohl im Normalbetrieb als auch im Redundanzbetrieb zur Entlüftung des Hinterachskanalanschlusses verwendet. Im Übrigen gelten die Ausführungen, die oben zum Vorderachskanalanschluss gemacht wurden, hier entsprechend.

Zur jeweiligen Be- und Entlüftung des Vorderachskanalanschlusses im Normalbetrieb weist die pneumatische Vorderachs-Hauptventilanordnung vorzugsweise ein mit dem ersten Vorratsanschluss und dem Vorderachskanalanschluss verbundenes Vorderachs-Belüftungs-Hauptventil und ein mit einer Entlüftung oder der Entlüftung verbindbares oder verbundenes und mit dem Vorderachskanalanschluss verbundenes Vorderachs-Entlüftungs-Hauptventil auf. In diesem Fall sind also separate Ventile zur Be- und Entlüftung des Vorderachskanalanschlusses vorgesehen. In Ausführungsformen kann auch vorgesehen sein, dass ein gemeinsames Be-/Entlüftungs-Hauptventil vorgesehen ist. Sowohl Vorderachs-Belüftungs-Hauptventil als auch Vorderachs-Entlüftungs-Hauptventil sind in diesem Fall pneumatisch schaltbar. Das Vorderachs-Belüftungs-Hauptventil empfängt den ersten Vorderachssteuerdruck, und das Vorderachs-Entlüftungs-Hauptventil empfängt vorzugsweise einen zweiten Vorderachssteuerdruck.

In entsprechender Weise weist die pneumatische Hinterachs-Hauptventilanordnung ein mit dem zweiten Vorratsanschluss und dem Hinterachskanalanschluss verbundenes Hinterachs-Belüftungs-Hauptventil und ein mit einer Entlüftung oder der Entlüftung verbundenes oder verbindbares und mit dem Hinterachskanalanschluss verbundenes Hinterachs-Entlüftungs-Hauptventil auf. Sowohl das Hinterachs-Belüftungs-Hauptventil als auch das Hinterachs-Entlüftungs-Hauptventil sind pneumatisch schaltbar. Das Hinterachs-Belüftungs-Hauptventil empfängt den ersten Hinterachssteuerdruck, und das Hinterachs-Entlüftungs-Hauptventil einen zweiten Hinterachssteuerdruck. In bestimmten Ausführungsformen kann auch vorgesehen sein, dass das Hinterachs-Belüftungs-Hauptventil und das Hinterachs-Entlüftungs-Hauptventil in ein einziges Be-/Entlüftungs-Hauptventil integriert sind.

Oben wurde bereits ausgeführt, dass es vorteilhaft ist, die Entlüftungspfade der entsprechenden Vorderachs- und Hinterachsanschlüsse zur Aussteuerung des redundanten Vorderachsbremsdrucks und des redundanten Hinterachsbremsdrucks zu verwenden. In diesem Sinne ist bevorzugt, dass das Vorderachs-Entlüftungs-Hauptventil mit dem ersten Redundanz-Relaisventil-Arbeitsanschluss verbunden ist. In entsprechender Weise ist vorzugsweise das Hinterachs-Entlüftungs-Hauptventil mit dem zweiten Redundanz-Relaisventil-Arbeitsanschluss verbunden. Sofern das Vorderachs-Entlüftungs-Hauptventil und das Hinterachs-Entlüftungs-Hauptventil geöffnet sind, kann in diesen Ausführungsformen dann der redundante Vorderachsbremsdruck und der redundante Hinterachsbremsdruck über das erste bzw. zweite Redundanz-Relaisventil ausgesteuert werden.

In einer Variante des elektropneumatischen Zweikanalachsmodulators weist die pneumatische Vorderachs-Hauptventilanordnung ein Vorderachs-Relaisventil und die pneumatische Hinterachs-Hauptventilanordnung ein Hinterachs-Relaisventil auf. In diesem Ausführungsbeispiel weist die pneumatische Vorderachs-Hauptventilanordnung und die pneumatische Hinterachs-Hauptventilanordnung keine separat geschalteten Hauptventile auf, wie zuvor beschrieben wurde, sondern Relaisventile, wie dies auch im Stand der Technik schon bereits eingesetzt wurde.

Das Vorderachs-Relaisventil weist einen mit dem ersten Vorratsanschluss verbundenen Vorderachs-Relaisventil-Vorratsanschluss, einen mit dem ersten Redundanz-Relaisventil-Arbeitsanschluss verbundenen Vorderachs-Relaisventil-Entlüftungsanschluss, einen mit dem Vorderachskanalanschluss verbundenen Vorderachs-Relaisventil-Arbeitsanschluss und einen mit der Vorderachs-Vorsteuereinheit verbundenen Vorderachs-Relaisventil-Steueranschluss auf.

In entsprechender Weise weist das Hinterachs-Relaisventil einen mit dem zweiten Vorratsanschluss verbundenen Hinterachs-Relaisventil-Vorratsanschluss, einen mit dem zweiten Redundanz-Relaisventil-Arbeitsanschluss verbundenen Hinterachs-Relaisventil-Entlüftungsanschluss, einen mit dem Hinterachskanalanschluss verbundenen Hinterachs-Relaisventil-Arbeitsanschluss und einen mit der Hinterachs-Vorsteuereinheit verbundenen Hinterachs-Relaisventil-Steueranschluss auf.

Das erste elektropneumatische Redundanzventil ist vorzugsweise als elektrisch schaltbares 3/2-Wegeventil ausgebildet. Es weist vorzugsweise einen mit dem ersten Redundanzanschluss verbundenen ersten Redundanzventilanschluss, einen mit dem ersten Redundanz-Relaisventil-Steueranschluss verbundenen zweiten Redundanzventilanschluss und einen mit einer Entlüftung oder der Entlüftung verbundenen dritten Redundanzventilanschluss auf. Über das Redundanzventil ist also der Redundanzdruck direkt an dem Redundanz-Relaisventil-Steueranschluss aussteuerbar, um über dieses den redundanten Vorderachsbremsdruck auszusteuern.

In einer Variante ist ferner der zweite Redundanzventilanschluss auch mit dem zweiten Redundanz-Relaisventil-Steueranschluss verbunden. Dies ist vorzugsweise dann der Fall, wenn der elektropneumatische Zweikanalachsmodulator nur einen ersten Redundanzanschluss aufweist.

Weist der elektropneumatische Zweikanalachsmodulator allerdings einen zweiten Redundanzanschluss auf und ist dementsprechend ein zweites elektropneumatisches Redundanzventil vorgesehen, weist dieses vorzugsweise einen mit dem zweiten Redundanzanschluss verbundenen vierten Redundanzventilanschluss, einen mit dem zweiten Redundanz-Relaisventil-Steueranschluss verbundenen fünften Redundanzventilanschluss und einen mit einer Entlüftung oder der Entlüftung verbundenen oder verbindbaren sechsten Redundanzventilanschluss auf. Auch das zweite elektropneumatische Redundanzventil ist daher vorzugsweise als elektrisch schaltbares 3/2-Wegeventil ausgebildet.

Weiterhin ist bevorzugt, dass der elektropneumatische Zweikanalachsmodulator eine elektrische Steuereinheit mit einem elektrischen Anschluss zum Empfangen von Bremssignalen und zum Bereitstellen entsprechender Schaltsignale wenigstens an die elektropneumatische Vorderachsventilanordnung und die elektropneumatische Hinterachsventilanordnung aufweist. Über den elektrischen Anschluss können Bremssignale beispielsweise Bremswertgeber oder aber einem zusätzlichen Zentralmodul bereitgestellt werden. Diese werden dann von der elektrischen Steuereinheit in entsprechende Schaltsignale wenigstens für die elektropneumatische Vorderachsventilanordnung und die elektropneumatische Hinterachsventilanordnung umgesetzt.

Weiterhin ist vorgesehen, dass der elektropneumatische Zweikanalachsmodulator einen ersten Drucksensor aufweist, der dazu vorgesehen ist, den Vorderachsbremsdruck zu erfassen und ein entsprechendes Vorderachsdrucksignal bereitzustellen. Weiterhin weist der elektropneumatische Zweikanalachsmodulator einen zweiten Drucksensor auf, der dazu vorgesehen ist, den Hinterachsbremsdruck zu erfassen und ein entsprechendes Hinterachsdrucksignal bereitzustellen. Basierend auf diesen Signalen kann die elektronische Steuereinheit entsprechende Schaltsignale bereitstellen oder Signale an ein Zentralmodul senden.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: einen schematischen Überblick über den elektropneumatischen Zweikanalachsmodulator;
- Fig. 2: ein erstes Ausführungsbeispiel des elektropneumatischen Zweikanalachsmodulators;
- Fig. 3: ein zweites Ausführungsbeispiel des elektropneumatischen Zweikanalachsmodulators;
- Fig. 4: ein drittes Ausführungsbeispiel des elektropneumatischen Zweikanalachsmodulators;
- Fig. 5: ein viertes Ausführungsbeispiel des elektropneumatischen Zweikanalachsmodulators; und
- Fig. 6: ein fünftes Ausführungsbeispiel des elektropneumatischen Zweikanalachsmodulators.

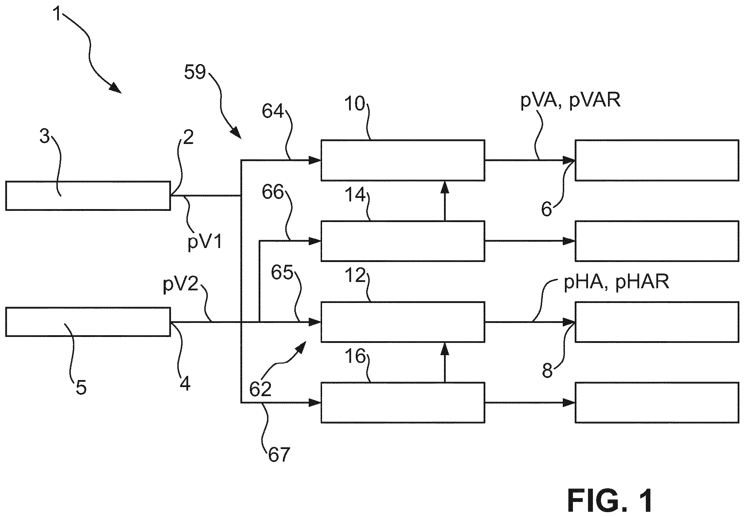

Fig. 1 zeigt zunächst einen generellen Überblick über den elektropneumatischen Zweikanalachsmodulator 1. Ein solcher elektropneumatischer Zweikanalachsmodulator 1 wird dazu eingesetzt, um aus einem Bremsanforderungssignal SB über zwei verschiedene Kanäle zwei verschiedene Bremsdrücke auszusteuern, beispielsweise für eine Vorderachse und eine Hinterachse.

In dem gezeigten grundsätzlichen Aufbau des elektropneumatischen Zweikanalachsmodulators 1 weist dieser einen ersten Vorratsanschluss 2 auf, an dem ein erster Druckluftvorrat 3 angeschlossen ist und einen ersten Vorratsdruck pV1 bereitstellt. Darüber hinaus weist der elektropneumatische Zweikanalachsmodulator 1 einen zweiten Vorratsanschluss 4 auf, an dem ein zweiter Druckluftvorrat 5 angeschlossen ist und einen zweiten Vorratsdruck pV2 bereitstellt. Über den ersten Vorratsanschluss 2 wird ein erster pneumatischer Kreis 59 gespeist, der einem Vorderachskanalanschluss 6 zugeordnet ist. Über den zweiten Vorratsanschluss 4 wird ein zweiter pneumatischer Kreis 62 gespeist, der einem Hinterachskanalanschluss 8 zugeordnet ist.

Zum Umsetzen eines Bremssignals in einen entsprechenden Vorderachsbremsdruck pVA an dem Vorderachskanalanschluss 6 weist der elektropneumatische Zweikanalachsmodulator 1 eine Vorderachsventilanordnung 10 auf. Die Vorderachsventilanordnung 10 ist über eine erste pneumatische Leitung 64 mit dem ersten Vorratsanschluss 2 verbunden. In entsprechender Weise weist der elektropneumatische Zweikanalachsmodulator 1 eine Hinterachsventilanordnung 12 auf, die über eine zweite pneumatische Leitung 65 mit dem zweiten Vorratsanschluss 4 verbunden ist und dazu dient, aus dem zweiten Vorratsdruck pV2, der am zweiten Vorratsanschluss 4 bereitgestellt ist, einen Hinterachsbremsdruck pHA an dem Hinterachskanalanschluss 8 auszusteuern.

Um nun bei Ausfall beispielsweise des ersten Kreises 59 einen redundanten Vorderachsbremsdruck pVAR am Vorderachskanalanschluss 6 auszusteuern, weist der elektropneumatische Zweikanalachsmodulator 1 eine erste Redundanzventilanordnung 14 auf. Die erste Redundanzventilanordnung 14 ist aber nicht mit dem ersten Vorratsanschluss 2 verbunden, sondern über eine dritte pneumatische Leitung 66 mit dem zweiten Vorratsanschluss 4. Das heißt, die erste Redundanzventilanordnung 14 wird von dem zweiten pneumatischen Kreis 62 gespeist. In der in Fig. 1 gezeigten Konfiguration ist die erste Redundanzventilanordnung 14 zunächst mit der Vorderachsventilanordnung 10 verbunden; in anderen Ausführungsformen kann die erste Redundanzventilanordnung 14 auch direkt mit dem Vorderachskanalanschluss 6 verbunden sein.

In entsprechender Weise weist der elektropneumatische Zweikanalachsmodulator 1 eine zweite Redundanzventilanordnung 16 auf, die über eine vierte pneumatische Leitung 66 mit dem ersten Vorratsanschluss 2 verbunden ist und über die dann ein redundanter Hinterachsbremsdruck pHAR an dem Hinterachskanalanschluss 8 aussteuerbar ist.

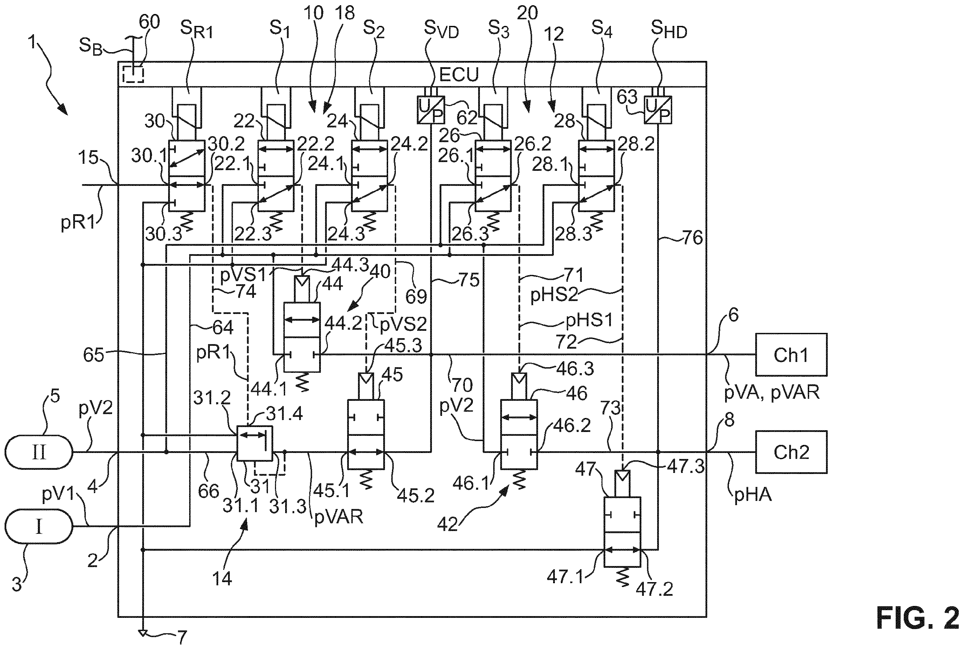

Fig. 2 zeigt nun ein erstes Ausführungsbeispiel und eine mögliche Umsetzung des elektropneumatischen Zweikanalachsmodulators aus Fig. 1.

Der elektropneumatische Zweikanalachsmodulator 1 gemäß diesem ersten Ausführungsbeispiel (Fig. 2) weist wiederum einen ersten Vorratsanschluss 2 auf, der mit dem ersten Druckluftvorrat 3 verbunden ist. Ferner weist er einen zweiten Vorratsanschluss 4 auf, der mit einem zweiten Druckluftvorrat 5 verbunden ist. An einem Vorderachskanalanschluss 6 wird der Vorderachsbremsdruck pVA und an dem Hinterachskanalanschluss 8 der Hinterachsbremsdruck pHA ausgesteuert. Zur Aussteuerung des Vorderachsbremsdrucks pVA weist der elektropneumatische Zweikanalachsmodulator 1 die Vorderachsventilanordnung 10 auf, und zur Aussteuerung des Hinterachsbremsdrucks pHA weist der elektropneumatische Zweikanalachsmodulator 1 die Hinterachsventilanordnung 12 auf. Sowohl die Vorderachsventilanordnung 10, als auch die Hinterachsventilanordnung 12, sind elektropneumatisch ausgebildet.

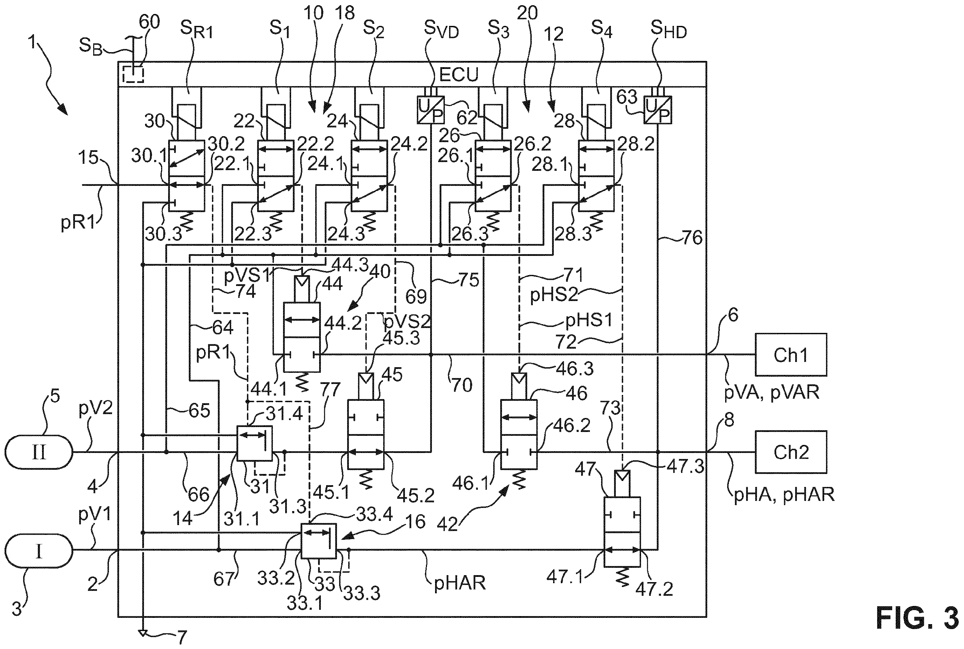

Zur Aussteuerung des redundanten Vorderachsbremsdrucks pVAR weist der elektropneumatische Zweikanalachsmodulator 1 die erste Redundanzventilanordnung 14 auf. Eine redundante Aussteuerung eines Hinterachsbremsdrucks ist in diesem ersten Ausführungsbeispiel (Fig. 2) nicht vorgesehen, und insofern weist der elektropneumatische Zweikanalachsmodulator 1 gemäß diesem ersten Ausführungsbeispiel (Fig. 2) keine zweite Redundanzventilanordnung 16 auf (vgl. bspw. Fig. 1 und 3). Insofern ist die Vorderachsventilanordnung 10 über die erste pneumatische Leitung 64 mit dem ersten Vorratsanschluss 2 verbunden und die Hinterachsventilanordnung 12 über die zweite pneumatische Leitung 65 mit dem zweiten Vorratsanschluss 4 verbunden. Ferner ist die erste Redundanzventilanordnung 14 über die dritte pneumatische Leitung 66 mit dem zweiten Vorratsanschluss 4 verbunden.

Die Vorderachsventilanordnung 10 weist in diesem Ausführungsbeispiel eine Vorderachs-Vorsteuereinheit 18 auf, die elektropneumatisch ausgebildet ist. In gleicher Weise weist die Hinterachsventilanordnung 12 eine Hinterachs-Vorsteuereinheit 20 auf.

Die Vorderachs-Vorsteuereinheit 18 weist ein Vorderachseinlassventil 22 und ein Vorderachsauslassventil 24 auf. Das Vorderachseinlassventil 22 ist als elektrisch schaltbares 3/2-Wegeventil ausgebildet und empfängt von einer elektronischen Steuereinheit ECU ein erstes Schaltsignal S1.

Das Vorderachseinlassventil 22 weist einen ersten Vorderachseinlassventilanschluss 22.1, einen zweiten Vorderachseinlassventilanschluss 22.2 und einen dritten Vorderachseinlassventilanschluss 22.3 auf. Der erste Vorderachseinlassventilanschluss 22.1 ist mit der ersten pneumatischen Leitung 64 verbunden und empfängt somit den ersten Vorratsdruck pV1. Der dritte Vorderachseinlassventilanschluss 22.3 ist mit einer Entlüftung 7 verbunden. Der zweite Vorderachseinlassventilanschluss 22.2 ist mit einer ersten Steuerleitung 68 verbunden, in die das Vorderachseinlassventil 22 einen ersten Vorderachssteuerdruck pVS1 aussteuert. Das Vorderachseinlassventil 22 ist vorzugsweise stromlos in der ersten in Fig. 2 gezeigten Schaltstellung, in der der dritte Vorderachseinlassventilanschluss 22.3 mit dem zweiten Vorderachseinlassventilanschluss 22.2 verbunden ist und somit die erste Steuerleitung 68 entlüftet wird. In der zweiten in Fig. 2 nicht gezeigten bestromten Schaltstellung ist hingegen der erste Vorderachseinlassventilanschluss 22.1 mit dem zweiten Vorderachseinlassventilanschluss 22.2 verbunden, und der erste Vorderachssteuerdruck pVS1 wird in der ersten Steuerleitung 68 ausgesteuert.

Das Vorderachsauslassventil 24 ist ebenfalls als elektrisch schaltbares 3/2-Wegeventil ausgebildet und empfängt ein zweites Schaltsignal S2. Das Vorderachsauslassventil 24 weist einen ersten Vorderachsauslassventilanschluss 24.1 einen zweiten Vorderachsauslassventilanschluss 24.2 und einen dritten Vorderachsauslassventilanschluss 24.3 auf. Der erste Vorderachsauslassventilanschluss 24.1 ist mit der ersten pneumatischen Leitung 64 verbunden, und an diesem wird folglich der erste Vorratsdruck pV1 ausgesteuert. Der zweite Vorderachsauslassventilanschluss 24.2 ist mit einer zweiten Steuerleitung 69 verbunden, in die ein zweiter Vorderachssteuerdruck pVS2 ausgesteuert wird. Der dritte Vorderachsauslassventilanschluss 24.3 ist mit der Entlüftung 7 verbunden. Das Vorderachsauslassventil 24 ist vorzugsweise stromlos in der in Fig. 2 gezeigten Schaltstellung, in der der zweite Vorderachsauslassventilanschluss 24.2 mit dem dritten Vorderachsauslassventilanschluss 24.3 verbunden ist, die zweite Steuerleitung 69 also entlüftet wird. In der zweiten in Fig. 2 nicht gezeigten Schaltstellung ist der erste Vorderachsauslassventilanschluss 24.1 mit dem zweiten Vorderachsauslassventilanschluss 24.2 verbunden, und der zweite Vorderachssteuerdruck pVS2 wird in der zweiten Steuerleitung 69 ausgesteuert.

Um den ersten Vorderachssteuerdruck pVS1 und den zweiten Vorderachssteuerdruck pVS2 in einen entsprechenden Vorderachsbremsdruck pVA am Vorderachskanalanschluss 6 umzusetzen, weist die Vorderachsventilanordnung 10 ferner eine pneumatische Vorderachs-Hauptventilanordnung 40 auf. Diese pneumatische Vorderachs-Hauptventilanordnung 40 weist ein VorderachsBelüftungs-Hauptventil 44 und ein Vorderachs-Entlüftungs-Hauptventil 45 auf. Sowohl das Vorderachs-Belüftungs-Hauptventil 44 als auch das VorderachsEntlüftungs-Hauptventil 45 sind als pneumatisch schaltbare 2/2-Wegeventile ausgebildet. Insofern weist das Vorderachs-Belüftungs-Hauptventil 44 einen ersten Vorderachsbelüftungsanschluss 44.1, einen zweiten Vorderachsbelüftungsanschluss 44.2 und einen Vorderachsbelüftungs-Steueranschluss 44.3 auf. Der erste Vorderachsbelüftungsanschluss 44.1 ist mit der ersten pneumatischen Leitung 64 verbunden, und insofern wird an diesem der erste Vorratsdruck pV1 ausgesteuert. Der zweite Vorderachsbelüftungsanschluss 44.2 ist mit einer Vorderachsbremsdruckleitung 70 verbunden, die den zweiten Vorderachsbelüftungsanschluss 44.2 mit dem Vorderachskanalanschluss 6 verbindet. Der Vorderachsbelüftungs-Steueranschluss 44.3 ist mit der ersten Steuerleitung 68 verbunden, sodass an diesem der erste Vorderachssteuerdruck pVS1 ausgesteuert wird. Das Vorderachs-Belüftungs-Hauptventil 44 ist vorzugsweise, sofern der erste Vorderachssteuerdruck pVS1 unterhalb eines vorbestimmten Schwellwerts ist, in der ersten in Fig. 2 gezeigten geschlossenen Schaltstellung, sodass der erste Vorderachsbelüftungsanschluss 44.1 und der zweite Vorderachsbelüftungsanschluss 44.2 getrennt sind. Sobald der erste Vorderachssteuerdruck pVS1 einen vorbestimmten Schwellwert überschreitet, schaltet das Vorderachs-Belüftungs-Hauptventil 44 in die zweite in Fig. 2 nicht gezeigte Schaltstellung, und der erste Vorderachsbelüftungsanschluss 44.1 ist pneumatisch mit dem zweiten Vorderachsbelüftungsanschluss 44.2 verbunden. In der Folge wird der Vorderachsbremsdruck pVA an dem Vorderachskanalanschluss 6 ausgesteuert.

In ähnlicher Weise weist die Hinterachs-Vorsteuereinheit 20 ein Hinterachseinlassventil 26 und ein Hinterachsauslassventil 28 auf. Das Hinterachseinlassventil 26 entspricht in seiner Konfiguration vorzugsweise dem Vorderachseinlassventil 22, und das Hinterachsauslassventil 28 entspricht in seiner Konfiguration vorzugsweise dem Vorderachsauslassventil 24. Insofern sind das Hinterachseinlassventil 26 und das Hinterachsauslassventil 28 als elektrisch schaltbare 3/2-Wegeventile ausgebildet, wobei die elektrische Steuereinheit ECU an dem Hinterachseinlassventil 26 ein drittes Schaltsignal S3 und an dem Hinterachsauslassventil 28 ein viertes Schaltsignal S4 bereitstellt.

Das Hinterachseinlassventil weist einen ersten Hinterachseinlassventilanschluss 26.1, einen zweiten Hinterachseinlassventilanschluss 26.1 und einen dritten Hinterachseinlassventilanschluss 26.3 auf. Der erste Hinterachseinlassventilanschluss 26.1 ist mit der zweiten pneumatischen Leitung 65 verbunden, sodass an diesem der zweite Vorratsdruck pV2 ausgesteuert wird. Der zweite Hinterachseinlassventilanschluss 26.2 ist mit einer dritten Steuerleitung 71 verbunden, sodass das Hinterachseinlassventil 26 in diese dritte Steuerleitung 71 den ersten Hinterachssteuerdruck pHS1 aussteuert. Der dritte Hinterachseinlassventilanschluss 26.3 ist mit der Entlüftung 7 verbunden. Das Hinterachseinlassventil 26 ist vorzugsweise in der stromlosen in Fig. 2 gezeigten Schaltstellung so geschaltet, dass der zweite Hinterachseinlassventilanschluss 26.2 mit dem dritten Hinterachseinlassventilanschluss 26.3 verbunden ist, die dritte Steuerleitung 71 also entlüftet wird. In der bestromten in Fig. 2 nicht gezeigten zweiten Schaltstellung ist das Hinterachseinlassventil 26 so geschaltet, dass der zweite Hinterachseinlassventilanschluss 26.2 mit dem ersten Hinterachseinlassventilanschluss 26.1 verbunden ist und in der Folge der erste Hinterachssteuerdruck pHS1 in der dritten Steuerleitung 71 ausgesteuert wird.

Das Hinterachsauslassventil 28 weist einen ersten Hinterachsauslassventilanschluss 28.1, einen zweiten Hinterachsauslassventilanschluss 28.2 und einen dritten Hinterachsauslassventilanschluss 28.3 auf. Der erste Hinterachsauslassventilanschluss 28.1 ist mit der zweiten pneumatischen Leitung 65 verbunden, sodass an diesem der zweite Vorratsdruck pV2 anliegt. Der zweite Hinterachsauslassventilanschluss 28.2 ist mit einer vierten pneumatischen Leitung 72 verbunden, in die das Hinterachsauslassventil 28 einen zweiten Hinterachssteuerdruck pHS2 aussteuert. Der dritte Hinterachsauslassventilanschluss 28.3 ist mit der Entlüftung 7 verbunden. Das Hinterachsauslassventil 28 ist stromlos vorzugsweise in der in Fig. 2 gezeigten ersten Schaltstellung, in der der zweite Hinterachsauslassventilanschluss 28.2 mit dem dritten Hinterachsauslassventilanschluss 28.3 verbunden ist. In dieser stromlosen Schaltstellung wird die dritte Steuerleitung 72 also entlüftet. In der zweiten in Fig. 2 nicht gezeigten bestromten Schaltstellung ist der erste Hinterachsauslassventilanschluss 28.1 mit dem zweiten Hinterachsauslassventilanschluss 28.2 verbunden, und der zweite Hinterachssteuerdruck pHS1 wird in der Folge in der vierten Steuerleitung 72 ausgesteuert.

Wie bereits in ähnlicher Weise mit Bezug auf die Vorderachsventilanordnung 10 beschrieben wurde, weist auch die Hinterachsventilanordnung 12 zur Umsetzung der ersten und zweiten Hinterachssteuerdrücke pHS1, pHS2 eine pneumatische Hinterachs-Hauptventilanordnung 42 auf. Die pneumatische Hinterachs-Hauptventilanordnung 42 weist ein Hinterachs-Belüftungs-Hauptventil 46 und ein Hinterachs-Entlüftungs-Hauptventil 47 auf. Sowohl das Hinterachs-Belüftungs-Hauptventil 46 als auch das Hinterachs-Entlüftungs-Hauptventil 47 sind als pneumatisch schaltbare 2/2-Wegeventile ausgebildet und weisen insofern vorzugsweise dieselbe Konfiguration auf wie das Vorderachs-Belüftungs-Hauptventil 44 und das Vorderachs-Entlüftungs-Hauptventil 45.

Das Hinterachs-Belüftungs-Hauptventil 46 weist einen ersten Hinterachsbelüftungsanschluss 46.1, einen zweiten Hinterachsbelüftungsanschluss 46.2 und einen Hinterachsbelüftungs-Steueranschluss 46.3 auf. Der erste Hinterachsbelüftungsanschluss 46.1 ist mit der zweiten pneumatischen Leitung 65 verbunden, sodass an diesem der zweite Vorratsdruck pV2 ausgesteuert wird. Der zweite Hinterachsbelüftungsanschluss 46.2 ist mit einer Hinterachsbremsdruckleitung 73 verbunden, die den zweiten Hinterachsbelüftungsanschluss 46.2 direkt mit dem Hinterachskanalanschluss 8 verbindet. Der Hinterachsbelüftungs-Steueranschluss 46.3 ist mit der dritten Steuerleitung 71 verbunden, sodass an diesem der erste Hinterachssteuerdruck pHS1 ausgesteuert wird. Sofern der erste Hinterachssteuerdruck pHS1 unterhalb eines vorbestimmten Schwellwerts liegt, ist das Hinterachs-Belüftungs-Hauptventil 46 vorzugsweise in der geschlossenen ersten in Fig. 2 gezeigten Schaltstellung. Sobald der erste Hinterachssteuerdruck pHS1 den vorbestimmten Schwellwert überschreitet, schaltet das Hinterachs-Belüftungs-Hauptventil 46 in die zweite in Fig. 2 nicht gezeigte offene Schaltstellung, und der erste Hinterachsbelüftungsanschluss 46.1 ist pneumatisch leitend mit dem zweiten Hinterachsbelüftungsanschluss 46.2 verbunden. In der Folge wird der Hinterachsbremsdruck pHA an den Hinterachskanalanschluss 8 ausgesteuert.

Zur Entlüftung des Hinterachskanalanschlusses 8 ist das Hinterachs-Entlüftungs-Hauptventil 47 vorgesehen. Dieses weist einen ersten Hinterachsentlüftungsanschluss 47.1, einen zweiten Hinterachsentlüftungsanschluss 47.2 und einen Hinterachsentlüftungs-Steueranschluss 47.3 auf. Der erste Hinterachsentlüftungsanschluss 47.1 ist mit der Entlüftung 7 verbunden, und der zweite Hinterachsentlüftungsanschluss 47.2 ist mit dem Hinterachskanalanschluss 8, genauer gesagt mit der Hinterachsbremsdruckleitung 73 verbunden. Der Hinterachsentlüftungs-Steueranschluss 47.3 ist mit der vierten Steuerleitung 72 verbunden, sodass an diesem der zweite Hinterachssteuerdruck pHS2 ausgesteuert wird. Das Hinterachs-Entlüftungs-Hautventil 47 ist vorzugsweise drucklos in der offenen in Fig. 2 gezeigten ersten Schaltstellung, sodass drucklos der Hinterachskanalanschluss 8 entlüftet wird. Sobald der zweite Hinterachssteuerdruck pHS2 einen vorbestimmten Schwellwert überschreitet, schaltet das Hinterachs-Entlüftungs-Hauptventil 47 in die zweite in Fig. 2 nicht gezeigte geschlossene Schaltstellung.

Um nun den Vorderachsbremsdruck pVA auch redundant aussteuern zu können, wenn der erste Kreis 59 ausfällt, beispielsweise, weil der erste Druckluftvorrat 3 leer ist, weist der elektropneumatische Zweikanalachsmodulator die erste Redundanzventilanordnung 14 (in diesem Fall die einzige Redundanzventilanordnung) auf. An dem elektropneumatischen Zweikanalachsmodulator 1 ist zu diesem Zweck ein erster Redundanzanschluss 15 (in dem Ausführungsbeispiel gemäß Fig. 2 der einzige Redundanzventilanschluss) vorgesehen, an dem ein erster Redundanzdruck pR1 (in dem Ausführungsbeispiel gemäß Fig. 2 der einzige Redundanzdruck) ausgesteuert wird. Dieser erste Redundanzdruck pR1 kann beispielsweise von einem pneumatischen Bremswertgeber, wie beispielsweise einem Bremspedal, bereitgestellt werden.

Die erste Redundanzventilanordnung 14 weist gemäß der vorliegenden Erfindung ein erstes elektropneumatisches Redundanzventil 30 sowie ein erstes Redundanz-Relaisventil 31 auf. Das erste elektropneumatische Redundanzventil 30 dient als Vorsteuerventil für das erste Redundanz-Relaisventil 31. Das erste elektropneumatische Redundanzventil 30 weist einen ersten Redundanzventilanschluss 30.1 einen zweiten Redundanzventilanschluss 30.2 und einen dritten Redundanzventilanschluss 30.3 auf. Der erste Redundanzventilanschluss 30.1 ist mit dem ersten Redundanzanschluss 15 verbunden. Der zweite Redundanzventilanschluss 30.2 ist mit einer ersten Redundanzsteuerleitung 74 verbunden, sodass der erste Redundanzdruck pR1 in die erste Redundanzsteuerleitung 74 ausgesteuert werden kann. Der dritte Redundanzventilanschluss 30.3 ist mit der Entlüftung 7 verbunden. Das erste elektropneumatische Redundanzventil ist als elektrisch schaltbares 3/2-Wegeventil ausgebildet und empfängt ein erstes Redundanzschaltsignal SR1. Stromlos ist das erste elektropneumatische Redundanzventil 30 vorzugsweise in der in Fig. 2 gezeigten offenen Schaltstellung, sodass stromlos der erste Redundanzdruck pR1 durch das erste elektropneumatische Redundanzventil 30 durchgesteuert werden kann. In dieser ersten stromlosen Schaltstellung ist also der erste Redundanzventilanschluss 30.1 mit dem zweiten Redundanzventilanschluss 30.2 verbunden. In der bestromten in Fig. 2 nicht gezeigten zweiten Schaltstellung ist vorzugsweise der zweite Redundanzventilanschluss 30.2 mit dem dritten Redundanzventilanschluss 30.3 verbunden, sodass die erste Redundanzsteuerleitung 74 entlüftet wird.

Das erste Redundanz-Relaisventil 31 weist einen ersten Redundanz-Relaisventil-Vorratsanschluss 31.1, einen ersten Redundanz-Relaisventil-Entlüftungsanschluss 31.2, einen ersten Redundanz-Relaisventil-Arbeitsanschluss 31.3 und einen ersten Redundanz-Relaisventil-Steueranschluss 31.4 auf. Der erste Redundanz-Relaisventil-Vorratsanschluss 31.1 ist mit der dritten pneumatischen Leitung 66 verbunden, sodass an diesem der zweite Vorratsdruck pV2 ausgesteuert wird. Das heißt, das erste Redundanz-Relaisventil 31, das zum Aussteuern des redundanten Vorderachsbremsdrucks pVAR genutzt wird, wird von dem zweiten Druckluftvorrat 5 gespeist, der originär dem zweiten pneumatischen Kreis 62 zugeordnet ist.

Der erste Redundanz-Relaisventil-Entlüftungsanschluss 31.2 ist mit der Entlüftung 7 verbunden. Der erste Redundanz-Relaisventil-Arbeitsanschluss 31.3 ist mit der Vorderachsventilanordnung 10, genauer gesagt mit der pneumatischen Vorderachs-Hauptventilanordnung 40, verbunden. Der erste Redundanz-Relaisventil-Steueranschluss 31.4 ist hingegen mit der ersten Redundanzsteuerleitung 74 verbunden, sodass an diesem der erste Redundanzdruck pR1 ausgesteuert wird. In Abhängigkeit der Höhe des ersten Redundanzdrucks pR1 steuert dann das erste Redundanz-Relaisventil 31 am ersten Redundanz-Relaisventil-Arbeitsanschluss 31.3 den redundanten Vorderachsbremsdruck pVAR aus. Dies funktioniert ohne elektrisches Schaltsignal SR1, das heißt in der stromlosen Schaltstellung des ersten elektropneumatischen Redundanzventils 30. Im Normalbetrieb liegt das erste Redundanzschaltsignal SR1 an, sodass der erste Redundanz-Relaisventil-Steueranschluss 31.4 entlüftet ist und somit auch der erste Redundanz-Relaisventil-Arbeitsanschluss 31.3 entlüftet wird.

Aus diesem Grund ist es möglich, das erste Redundanz-Relaisventil 31 auch zur Entlüftung des Vorderachskanalanschlusses 6 zu nutzen. Aus diesem Grund ist der erste Redundanz-Relaisventil-Arbeitsanschluss 31.3 mit dem Vorderachs-Entlüftungs-Hauptventil 45 verbunden, genauer gesagt mit einem ersten Vorderachsentlüftungsanschluss 45.1. Das Vorderachs-Entlüftungs-Hauptventil 45 weist darüber hinaus einen zweiten Vorderachsentlüftungsanschluss 45.2 auf, der mit der Vorderachsbremsdruckleitung 70 verbunden ist, sowie einen Vorderachsentlüftungs-Steueranschluss 45.3, der mit der zweiten Steuerleitung 69 verbunden ist. Das Vorderachs-Entlüftungs-Hauptventil 45 ist ebenso wie das Hinterachs-Entlüftungs-Hauptventil 46 vorzugsweise drucklos in der offenen in Fig. 2 gezeigten Schaltstellung. Fällt also beispielsweise die elektrische Steuereinheit ECU für die Vorderachsventilanordnung 10 oder auch die Hinterachsventilanordnung 12 aus, ist das Vorderachs-Entlüftungs-Hauptventil 45 geöffnet, da von dem Vorderachsauslassventil 24 kein zweiter Vorderachssteuerdruck pVS2 ausgesteuert wird. Auch von dem Vorderachseinlassventil 22 wird kein erster Vorderachssteuerdruck pVS1 ausgesteuert, sodass kein Vorderachsbremsdruck pVA am Vorderachskanalanschluss 6 ausgesteuert werden kann. Gleichzeitig ist aber auch das erste elektropneumatische Redundanzventil 30 in der in der Fig. 2 gezeigten ersten Schaltstellung, sodass der erste Redundanzdruck pR1 über die erste Redundanzsteuerleitung 74 am ersten Redundanz-Relaisventil 31 ausgesteuert wird. Der offene Entlüftungskanal des Vorderachskanalanschlusses 6 kann dann zur Aussteuerung des redundanten Vorderachsbremsdrucks pVAR genutzt werden, wobei dieser dann vom zweiten Druckluftvorrat 5 gespeist wird.

Darüber hinaus weist der elektropneumatische Zweikanalachsmodulator 1 einen ersten Drucksensor 61 und einen zweiten Drucksensor 63 auf. Der erste Drucksensor 61 stellt ein Vorderachsdrucksignal SVD an der elektronischen Steuereinheit ECU bereit, und der zweite Drucksensor 63 stellt ein Hinterachsdrucksignal SHD an der elektrischen Steuereinheit ECU bereit. Zu diesem Zweck ist der erste Drucksensor 61 über eine erste Druckmessleitung 75 mit der Vorderachsbremsdruckleitung 70 verbunden, und der zweite Drucksensor 63 ist über eine zweite Druckmessleitung 76 mit der Hinterachsbremsdruckleitung 73 verbunden.

Fig. 3 zeigt nun ein zweites Ausführungsbeispiel des elektropneumatischen Zweikanalachsmodulators 1. Im Nachfolgenden sind gleiche und ähnliche Elemente mit gleichen Bezugszeichen versehen, sodass für diese Elemente vollumfänglich auf die obigen Ausführungen zum ersten Ausführungsbeispiel (Fig. 2) Bezug genommen wird. Im Nachfolgenden wird insbesondere auf die Unterschiede zum ersten Ausführungsbeispiel eingegangen.

Der maßgebliche Unterschied zwischen dem ersten Ausführungsbeispiel (Fig. 2) und dem zweiten Ausführungsbeispiel (Fig. 3) liegt darin, dass nicht nur der Vorderachsbremsdruck pVA redundant durch einen redundanten Vorderachsbremsdruck pVAR ausgesteuert werden kann, sondern auch der Hinterachsbremsdruck pHA als redundanter Hinterachsbremsdruck pHAR redundant ausgesteuert werden kann. Um dies zu realisieren, weist der elektropneumatische Zweikanalachsmodulator 1 gemäß dem zweiten Ausführungsbeispiel (Fig. 3) eine zweite Redundanzventilanordnung 16 auf. Diese zweite Redundanzventilanordnung 16 empfängt denselben ersten Redundanzdruck pR1, der über den ersten Redundanzanschluss 15 (hier wiederum der einzige Redundanzanschluss) bereitgestellt wird.

Die zweite Redundanzventilanordnung 16 weist in diesem Ausführungsbeispiel (Fig. 3) ein zweites Redundanz-Relaisventil 33 auf, das zwischen die Hinterachsventilanordnung 12 und den ersten Vorratsanschluss 2 geschaltet ist. Das zweite Redundanz-Relaisventil 33 weist einen zweiten Redundanz-Relaisventil-Vorratsanschluss 33.1, einen zweiten Redundanz-Relaisventil-Entlüftungsanschluss 33.2, einen zweiten Redundanz-Relaisventil-Arbeitsanschluss 33.3 und einen zweiten Redundanz-Relaisventil-Steueranschluss 33.4 auf. Der zweite Redundanz-Relaisventil-Vorratsanschluss 33.1 ist mit der vierten pneumatischen Leitung 67 verbunden, wie das grundsätzlich schon mit Bezug auf Fig. 1 beschrieben wurde. Die vierte pneumatische Leitung 67 ist ihrerseits mit dem ersten Vorratsanschluss 2 verbunden, sodass an dem zweiten Redundanz-Relaisventil-Vorratsanschluss 33.1 der erste Vorratsdruck pV1 anliegt. Der zweite Redundanz-Relaisventil-Entlüftungsanschluss 33.2 ist mit der Entlüftung 7 verbunden. Der zweite Redundanz-Relaisventil-Arbeitsanschluss 33.3 ist mit dem ersten Hinterachsentlüftungsanschluss 47.1 des Hinterachs-Entlüftungs-Hauptventils 47 verbunden, also mit dem Entlüftungspfad des Hinterachskanalanschlusses 8.

Die Funktionsweise wurde oben bereits mit Bezug auf das erste Redundanz-Relaisventil 31 beschrieben. Der zweite Redundanz-Relaisventil-Steueranschluss 33.4 ist mit einer zweiten Redundanzsteuerleitung 77 verbunden, die in diesem Ausführungsbeispiel (Fig. 3) von der ersten Redundanzsteuerleitung 74 abzweigt, sodass auch am zweiten Redundanz-Relaisventil-Steueranschluss 33.4 der erste Redundanzdruck pR1 (in diesem Ausführungsbeispiel der einzige Redundanzdruck) anliegt. Folglich kann in diesem Ausführungsbeispiel (Fig. 3) in Abhängigkeit des ersten Redundanzdrucks pR1 sowohl der redundante Vorderachsbremsdruck pVAR als auch der redundante Hinterachsbremsdruck pHAR an den jeweiligen Vorderachskanalanschluss 6 und Hinterachskanalanschluss 8 ausgesteuert werden. Dabei findet die Aussteuerung dieser Drücke über Kreuz statt, das heißt, der redundante Vorderachsbremsdruck pVAR wird von dem zweiten Vorratsanschluss 4 aus gespeist, und der redundante Hinterachsbremsdruck pHAR wird von dem ersten Vorratsanschluss 2 aus gespeist.

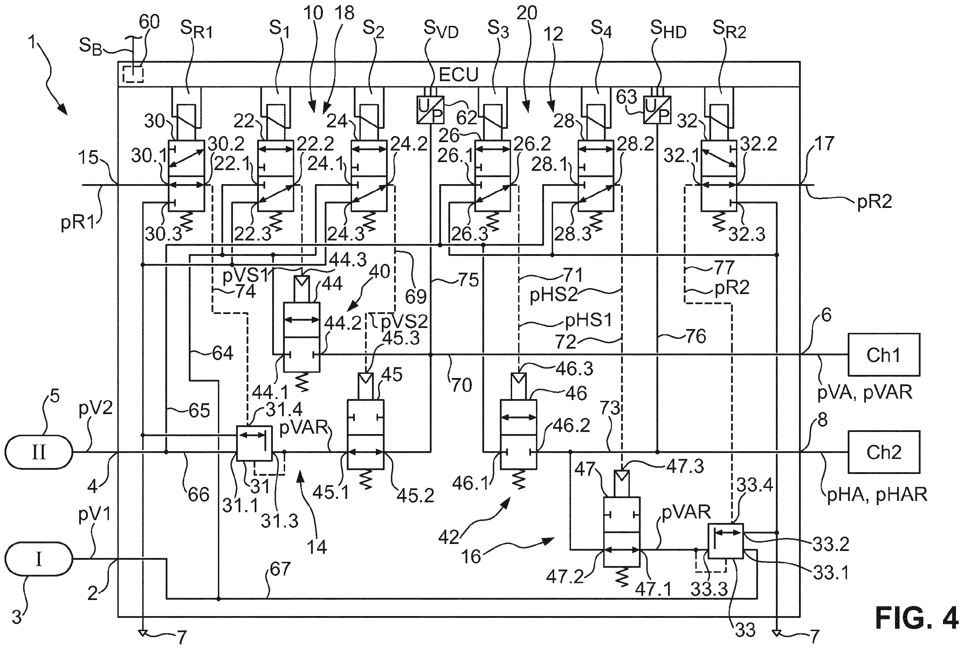

Ein drittes Ausführungsbeispiel des elektropneumatischen Zweikanalachsmodulators 1 ist in Fig. 4 gezeigt. Wiederum werden insbesondere die Unterschiede zu dem zweiten Ausführungsbeispiel (Fig. 3) erläutert und für die übrigen Elemente vollumfänglich auf die obige Beschreibung zu den ersten und zweiten Ausführungsbeispielen (Fig. 2 und 3) Bezug genommen.

Der wesentliche Unterschied im dritten Ausführungsbeispiel (Fig. 4) liegt darin, dass ein zweiter Redundanzanschluss 17 vorgesehen ist. An dem zweiten Redundanzanschluss 17 kann ein zweiter Redundanzdruck pR2 ausgesteuert werden, beispielsweise mittels eines pneumatischen Bremswertgebers, wie etwa einem pneumatischen Bremspedal.

Insofern weist die zweite Redundanzventilanordnung 16 in diesem Ausführungsbeispiel (Fig. 4) auch ein zweites elektropneumatisches Redundanzventil 32 auf, das in seiner Funktion dem ersten elektropneumatischen Redundanzventil 30 entspricht. Das zweite elektropneumatische Redundanzventil 32 ist als elektrisch schaltbares 3/2-Wegeventil ausgebildet und empfängt von der elektronischen Steuereinheit ECU ein zweites Redundanzschaltsignal SR2. Das zweite elektropneumatische Redundanzventil 32 weist einen vierten Redundanzventilanschluss 32.2, einen fünften Redundanzventilanschluss 32.1 und einen sechsten Redundanzventilanschluss 32.3 auf. Der vierte Redundanzventilanschluss 32.2 ist mit dem zweiten Redundanzanschluss 17 verbunden. Der fünfte Redundanzventilanschluss 32.1 ist mit einer zweiten Redundanzsteuerleitung 77 verbunden, die hier nicht wie im zweiten Ausführungsbeispiel (Fig. 3) von der ersten Redundanzsteuerleitung 74 abzweigt, sondern direkt mit dem fünften Redundanzventilanschluss 32.1 verbunden ist. In der zweiten Redundanzsteuerleitung 77 kann folglich der zweite Redundanzdruck pR2 ausgesteuert werden. Der sechste Redundanzventilanschluss 32.3 ist mit der Entlüftung 7 verbunden. Das zweite elektropneumatische Redundanzventil 32 ist wiederum vorzugsweise stromlos in der ersten in Fig. 4 gezeigten Schaltstellung, in welcher der vierte Redundanzventilanschluss 32.2 mit dem fünften Redundanzventilanschluss 32.1 verbunden ist. Bestromt ist das zweite elektropneumatische Redundanzventil 32 vorzugsweise in der zweiten in Fig. 4 nicht gezeigten Schaltstellung, in der der fünfte Redundanzventilanschluss 32.1 mit dem sechsten Redundanzventilanschluss 32.3 verbunden ist und somit die zweite Redundanzsteuerleitung 77 entlüftet wird.

In diesem Ausführungsbeispiel können also unabhängig voneinander der erste und zweite Redundanzdruck pR1, pR2 bereitgestellt werden und unabhängig voneinander ein redundanter Vorderachsbremsdruck pVAR und ein redundanter Hinterachsbremsdruck pHAR ausgesteuert werden.

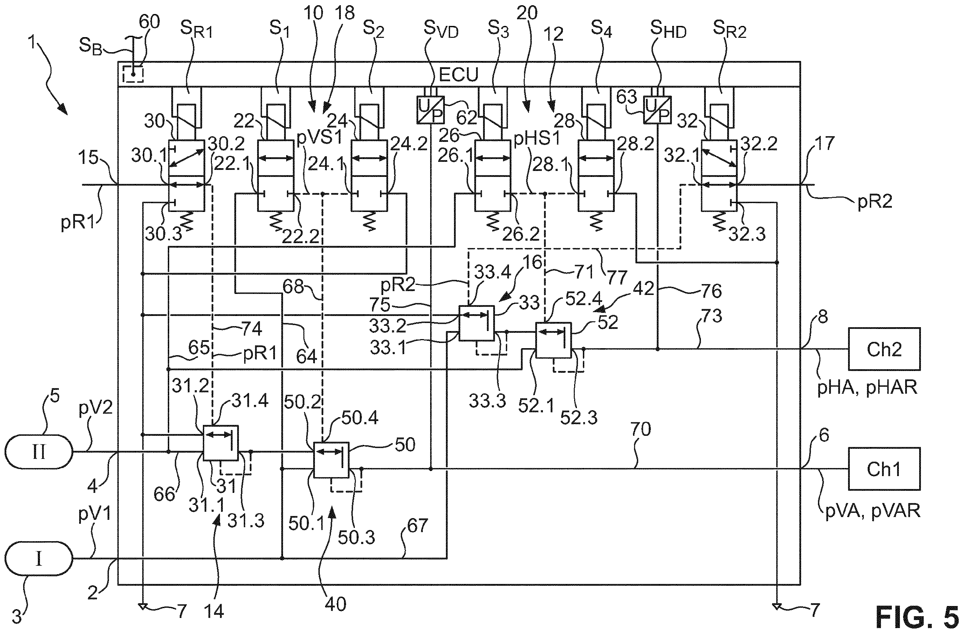

Fig. 5 zeigt ein viertes Ausführungsbeispiel des elektropneumatischen Zweikanalachsmodulators 1, und wiederum sind gleich und ähnliche Elemente mit gleichen Bezugszeichen versehen; insofern wird vollumfänglich auf die obige Beschreibung zu den ersten drei Ausführungsbeispielen (Fig. 2 bis 4) Bezug genommen. Nachfolgend wird wiederum maßgeblich auf die Unterschiede zum dritten Ausführungsbeispiel (Fig. 4) eingegangen.

Der maßgebliche Unterschied in dem vierten Ausführungsbeispiel (Fig. 5) liegt darin, dass die pneumatische Vorderachs-Hauptventilanordnung 40 ein Vorderachs-Relaisventil 50 und die pneumatische Hinterachs-Hauptventilanordnung 42 ein Hinterachs-Relaisventil 52 aufweist.

Das Vorderachs-Relaisventil 50 weist einen Vorderachs-Relaisventil-Vorratsanschluss 50.1, einen Vorderachs-Relaisventil-Entlüftungsanschluss 50.2, einen Vorderachs-Relaisventil-Arbeitsanschluss 50.3 und einen Vorderachs-Relaisventil-Steueranschluss 50.4 auf. Der Vorderachs-Relaisventil-Vorratsanschluss 50.1 ist mit der vierten pneumatischen Leitung 67 verbunden, sodass an diesem der erste Vorratsdruck pV1 anliegt. Der Vorderachs-Relaisventil-Entlüftungsanschluss 50.2 ist mit dem ersten Redundanz-Relaisventil-Arbeitsanschluss 31.3 verbunden, wie dies auch mit Bezug auf das dritte Ausführungsbeispiel (Fig. 4) mit Bezug auf den zweiten Vorderachsentlüftungsanschluss 45.2 beschrieben wurde. Der Vorderachs-Relaisventil-Arbeitsanschluss 50.3 ist mit der Vorderachsbremsdruckleitung 70 verbunden. Der Vorderachs-Relaisventil-Steueranschluss 50.4 ist mit der ersten Steuerleitung 68 verbunden, sodass an diesem der erste Vorderachssteuerdruck pVS1 anliegt. In diesem Ausführungsbeispiel existiert nur ein einziger Vorderachssteuerdruck, nämlich der erste Vorderachssteuerdruck pVS1. Der Grund hierfür ist, dass nicht nur die pneumatische Vorderachs-Hauptventilanordnung 40 anders gestaltet ist, sondern auch die Vorderachs-Vorsteuereinheit 18. In diesem Ausführungsbeispiel (Fig. 5) sind das Vorderachseinlassventil 22 und das Vorderachsauslassventil 24 als 2/2-Wegeventile ausgebildet, da das Aussteuern von zwei separaten Steuerdrücken, wie dies in den ersten Ausführungsbeispielen (Fig. 2 bis 4) notwendig war, um die zwei pneumatisch geschalteten Ventile der Hauptventileinheit anzusteuern, nicht erforderlich ist.

Insofern weist das Vorderachseinlassventil 22 in diesem Ausführungsbeispiel (Fig. 5) nur einen ersten Vorderachseinlassventilanschluss 22.1 und einen zweiten Vorderachseinlassventilanschluss 22.2 auf, wobei der erste Vorderachseinlassventilanschluss 22.1 mit der ersten pneumatischen Leitung 64 verbunden ist, wie dies oben grundsätzlich schon beschrieben wurde. Der zweite Vorderachseinlassventilanschluss 22.2 ist mit der ersten Steuerleitung 68 verbunden, wie dies ebenfalls oben bereits beschrieben wurde. Um die erste Steuerleitung 68 zu entlüften, ist das Vorderachsauslassventil 24 ebenfalls als 2/2-Wegeventil ausgebildet und weist einen ersten Vorderachsauslassventilanschluss 24.1 und einen zweiten Vorderachsauslassventilanschluss 24.2 auf. Der erste Vorderachsauslassventilanschluss 24.1 ist mit der Entlüftung verbunden, während der zweite Vorderachsauslassventilanschluss 24.2 mit der ersten Steuerleitung 68 verbunden ist, um diese zu entlüften. Auf diese Weise lässt sich der erste Vorderachssteuerdruck pVS1 entsprechend einstellen und an den Vorderachs-Relaisventil-Steueranschluss 50.4 aussteuern.

In übereinstimmender Weise weist das Hinterachs-Relaisventil 52 einen Hinterachs-Relaisventil-Vorratsanschluss 52.1, einen Hinterachs-Relaisventil-Entlüftungsanschluss 52.2, einen Hinterachs-Relaisventil-Arbeitsanschluss 52.3 und einen Hinterachs-Relaisventil-Steueranschluss 52.4 auf. Der Hinterachs-Relaisventil-Vorratsanschluss 52.1 ist mit der zweiten pneumatischen Leitung 65 verbunden, sodass an diesem der zweite Vorratsdruck pV2 anliegt. Der Hinterachs-Relaisventil-Entlüftungsanschluss 52.2 ist mit dem zweiten Redundanz-Relaisventil-Arbeitsanschluss 33.3 verbunden, wie dies grundsätzlich oben bereits beschrieben wurde mit Bezug auf den ersten Hinterachsentlüftungsanschluss 47.1 (vgl. Fig. 3). Der Hinterachs-Relaisventil-Arbeitsanschluss 52.3 ist mit der Hinterachsbremsdruckleitung 73 verbunden. Der Hinterachs-Relaisventil-Steueranschluss 52.4 ist mit der dritten Steuerleitung 71 verbunden. Wiederum bedarf das Hinterachs-Relaisventil 52 nur eines einzigen Steuerdrucks, nämlich des ersten Hinterachssteuerdrucks pHS1, wie dies grundsätzlich schon mit Bezug auf das Vorderachs-Relaisventil 50 beschrieben wurde. Insofern ist auch die Hinterachs-Vorsteuereinheit 20 abweichend zu den ersten Ausführungsbeispielen ausgeführt, nämlich indem das Hinterachseinlassventil 26 als 2/2-Wegeventil und das Hinterachsauslassventil 28 ebenfalls als 2/2-Wegeventil ausgebildet ist. Das Hinterachseinlassventil 26 weist den ersten Hinterachseinlassventilanschluss 26.1 und den zweiten Hinterachseinlassventilanschluss 26.2 auf, wobei der erste Hinterachseinlassventilanschluss 26.1 mit der zweiten pneumatischen Leitung 65 verbunden ist, wie dies oben bereits beschrieben wurde. Insofern liegt an dem ersten Hinterachseinlassventilanschluss 26.1 der zweite Vorratsdruck pV2 an. Der zweite Hinterachseinlassventilanschluss 26.2 ist mit der dritten Steuerleitung 71 verbunden und steuert in diese den ersten Hinterachssteuerdruck pHS1 aus. Zum Entlüften der dritten Steuerleitung 71 ist diese mit dem Hinterachsauslassventil 28 verbunden, genauer gesagt mit dem zweiten Hinterachsauslassventilanschluss 28.2. Der erste Hinterachsauslassventilanschluss 28.1 ist mit der Entlüftung 7 verbunden.

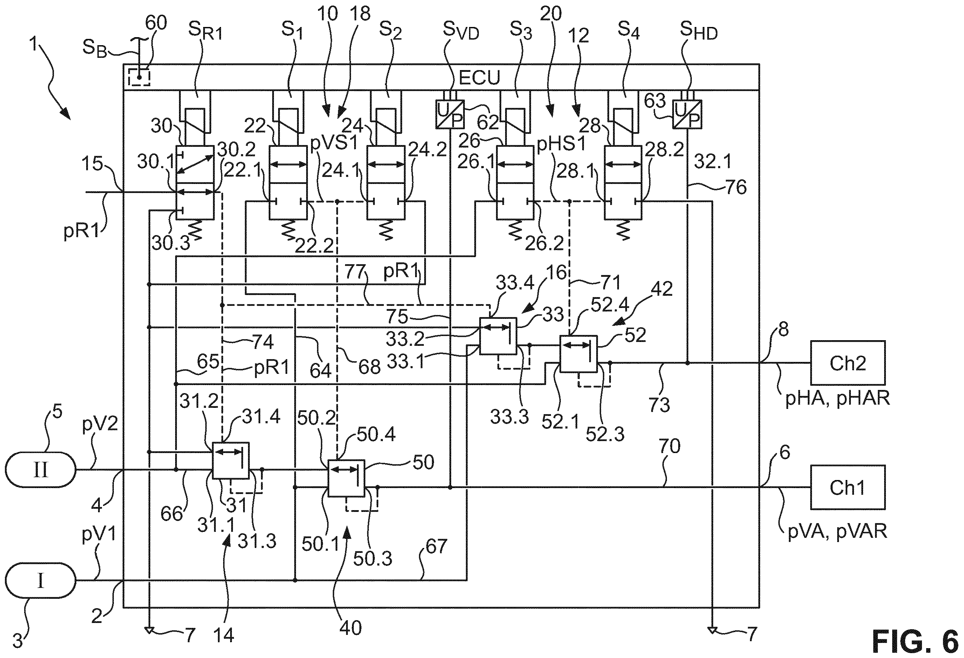

Das fünfte Ausführungsbeispiel (Fig. 6) basiert grundsätzlich auf dem vierten Ausführungsbeispiel (Fig. 5), unterscheidet sich von diesem aber dadurch, dass wiederum nur ein einziger Redundanzanschluss 15 vorgesehen ist, wie dies grundsätzlich schon mit Bezug auf das erste und das zweite Ausführungsbeispiel (Fig. 2 und 3) beschrieben wurde.

Insofern ist die zweite Redundanzsteuerleitung 77 wieder als Abzweigleitung von der ersten Redundanzsteuerleitung 74 ausgebildet, sodass auch am zweiten Redundanz-Relaisventil-Steueranschluss 33.4 der erste Redundanzdruck pR1 anliegt.

Die übrigen Elemente sind identisch zu dem vorherigen Ausführungsbeispiel (Fig. 5).

### Bezugszeichenliste (Bestandteil der Beschreibung)

- 1: elektropneumatischer Zweikanalachsmodulator
- 2: erster Vorratsanschluss
- 3: erster Druckluftvorrat
- 4: zweiter Vorratsanschluss
- 5: zweiter Druckluftvorrat
- 6: Vorderachskanalanschluss
- 7: Entlüftung
- 8: Hinterachskanalanschluss
- 10: Vorderachsventilanordnung
- 12: Hinterachsventilanordnung
- 14: erste Redundanzventilanordnung
- 15: erster Redundanzanschluss
- 16: zweite Redundanzventilanordnung
- 17: zweiter Redundanzanschluss
- 18: Vorderachs-Vorsteuereinheit
- 20: Hinterachs-Vorsteuereinheit
- 22: Vorderachseinlassventil
- 22.1: erster Vorderachseinlassventilanschluss
- 22.2: zweiter Vorderachseinlassventilanschluss
- 22.3: dritter Vorderachseinlassventilanschluss
- 24: Vorderachsauslassventil
- 24.1: erster Vorderachsauslassventilanschluss
- 24.2: zweiter Vorderachsauslassventilanschluss
- 24.3: dritter Vorderachsauslassventilanschluss
- 26: Hinterachseinlassventil
- 26.1: erster Hinterachseinlassventilanschluss
- 26.2: zweiter Hinterachseinlassventilanschluss
- 26.3: dritter Hinterachseinlassventilanschluss
- 28: Hinterachsauslassventil
- 28.1: erster Hinterachsauslassventilanschluss
- 28.2: zweiter Hinterachsauslassventilanschluss
- 28.3: dritter Hinterachsauslassventilanschluss
- 30: erstes elektropneumatisches Redundanzventil
- 30.1: erster Redundanzventilanschluss
- 30.2: zweiter Redundanzventilanschluss
- 30.3: dritter Redundanzventilanschluss
- 31: erstes Redundanz-Relaisventil
- 31.1: erster Redundanz-Relaisventil-Vorratsanschluss
- 31.2: erster Redundanz-Relaisventil-Entlüftungsanschluss
- 31.3: erster Redundanz-Relaisventil-Arbeitsanschluss
- 31.4: erster Redundanz-Relaisventil-Steueranschluss
- 32: zweites elektropneumatisches Redundanzventil
- 32.2: vierter Redundanzventilanschluss
- 32.1: fünfter Redundanzventilanschluss
- 32.3: sechster Redundanzventilanschluss
- 33: zweites Redundanz-Relaisventil
- 33.1: zweiter Redundanz-Relaisventil-Vorratsanschluss
- 33.2: zweiter Redundanz-Relaisventil-Entlüftungsanschluss
- 33.3: zweiter Redundanz-Relaisventil-Arbeitsanschluss
- 33.4: zweiter Redundanz-Relaisventil-Steueranschluss
- 40: pneumatische Vorderachs-Hauptventilanordnung
- 42: pneumatische Hinterachs-Hauptventilanordnung
- 44: Vorderachs-Belüftungs-Hauptventil
- 44.1: erster Vorderachsbelüftungsanschluss
- 44.2: zweiter Vorderachsbelüftungsanschluss
- 44.3: Vorderachsbelüftungs-Steueranschluss
- 45: Vorderachs-Entlüftungs-Hauptventil
- 45.1: erster Vorderachsentlüftungsanschluss
- 45.2: zweiter Vorderachsentlüftungsanschluss
- 45.3: Vorderachsentlüftungs-Steueranschluss
- 46: Hinterachs-Belüftungs-Hauptventil
- 46.1: erster Hinterachsbelüftungsanschluss
- 46.2: zweiter Hinterachsbelüftungsanschluss
- 46.3: Hinterachsbelüftungs-Steueranschluss
- 47: Hinterachs-Entlüftungs-Hauptventil
- 47.1: erster Hinterachsentlüftungsanschluss
- 47.2: zweiter Hinterachsentlüftungsanschluss
- 47.3: Hinterachsentlüftungs-Steueranschluss
- 50: Vorderachs-Relaisventil
- 50.1: Vorderachs-Relaisventil-Vorratsanschluss
- 50.2: Vorderachs-Relaisventil-Entlüftungsanschluss
- 50.3: Vorderachs-Relaisventil-Arbeitsanschluss
- 50.4: Vorderachs-Relaisventil-Steueranschluss
- 52: Hinterachs-Relaisventil
- 52.1: Hinterachs-Relaisventil-Vorratsanschluss
- 52.2: Hinterachs-Relaisventil-Entlüftungsanschluss
- 52.3: Hinterachs-Relaisventil-Arbeitsanschluss
- 52.4: Hinterachs-Relaisventil-Steueranschluss
- 59: erster pneumatischer kreis
- 60: elektrischer Anschluss
- 61: erster Drucksensor
- 62: zweiter pneumatischer kreis
- 63: zweiter Drucksensor
- 64: erste pneumatische Leitung
- 65: zweite pneumatische Leitung
- 66: dritte pneumatische Leitung
- 67: vierte pneumatische Leitung
- 68: erste Steuerleitung
- 69: zweite Steuerleitung
- 70: Vorderachsbremsdruckleitung
- 71: dritte Steuerleitung
- 72: vierte Steuerleitung
- 73: Hinterachsbremsdruckleitung
- 74: erste Redundanzsteuerleitung
- 75: erste Druckmessleitung
- 76: zweite Druckmessleitung
- 77: zweite Redundanzsteuerleitung
- pV1: erster Vorratsdruck
- pV2: zweiter Vorratsdruck
- pVA: Vorderachsbremsdruck
- pHA: Hinterachsbremsdruck
- pVAR: redundanter Vorderachsbremsdruck
- pHAR: redundanter Hinterachsbremsdruck
- pR1: erster Redundanzdruck
- pR2: zweiter Redundanzdruck
- pVS1: erster Vorderachssteuerdruck
- pVS2: zweiter Vorderachssteuerdruck
- pHS1: erster Hinterachssteuerdruck
- pHS2: zweiter Hinterachssteuerdruck
- S1: erstes Schaltsignal
- S2: zweites Schaltsignal
- S3: drittes Schaltsignal
- S4: viertes Schaltsignal
- SB: Bremsanforderungssignal
- SR1: erstes Redundanzschaltsignal
- SR2: zweites Redundanzschaltsignal

## Patentansprüche

1. Elektropneumatischer Zweikanalachsmodulator (1) für Nutzfahrzeuge, mit
einem ersten Vorratsanschluss (2) zum Anschließen eines ersten Druckluftvorrats (3) und einem zweiten Vorratsanschluss (4) zum Anschließen eines zweiten Druckluftvorrats (5);
einem Vorderachskanalanschluss (6);
einem Hinterachskanalanschluss (8);
einer elektropneumatischen Vorderachsventilanordnung (10), die mit dem ersten Vorratsanschluss (2) verbunden ist zum Aussteuern eines Vorderachsbremsdrucks (pVA) an dem Vorderachskanalanschluss (6);
einer elektropneumatischen Hinterachsventilanordnung (12), die mit dem zweiten Vorratsanschluss (4) verbunden ist zum Aussteuern eines Hinterachsbremsdrucks (pHA) an dem Hinterachskanalanschluss (8);
**gekennzeichnet durch**
eine erste Redundanzventilanordnung (14), die mit dem zweiten Vorratsanschluss (4) zum Aussteuern eines redundanten Vorderachsbremsdrucks (pVAR) an dem Vorderachskanalanschluss (6) verbunden ist, und
einen ersten Redundanzanschluss (15) zum Empfangen eines ersten Redundanzdrucks (pR1), der wenigstens mit der ersten Redundanzventilanordnung (14) verbunden ist,
wobei die erste Redundanzventilanordnung (14) ein mit dem ersten Redundanzanschluss (15) verbundenes erstes elektropneumatisches Redundanzventil (30) und ein erstes Redundanz-Relaisventil (31) aufweist.

2. Elektropneumatischer Zweikanalachsmodulator (1) nach Anspruch 1, aufweisend eine zweite Redundanzventilanordnung (16), die mit dem ersten Vorratsanschluss (2) zum Aussteuern eines redundanten Hinterachsbremsdrucks (pHAR) an dem Hinterachskanalanschluss (8) verbunden ist.

3. Elektropneumatischer Zweikanalachsmodulator (1) nach Anspruch 2, aufweisend einen zweiten Redundanzanschluss (17) zum Empfangen eines zweiten Redundanzdrucks (pR2), der mit der zweiten Redundanzventilanordnung (16) verbunden ist.

4. Elektropneumatischer Zweikanalachsmodulator (1) nach einem der vorstehenden Ansprüche, wobei
die elektropneumatische Vorderachsventilanordnung (10) eine Vorderachs-Vorsteuereinheit (18) mit einem Vorderachseinlassventil (22) zum Aussteuern eines ersten Vorderachssteuerdrucks (pVS1) und einem Vorderachsauslassventil (24) aufweist, und
die elektropneumatische Hinterachsventilanordnung (12) eine Hinterachs-Vorsteuereinheit (20) mit einem Hinterachseinlassventil (26) zum Aussteuern eines ersten Hinterachssteuerdrucks (pHS1) und einem Hinterachsauslassventil (28) aufweist.

5. Elektropneumatischer Zweikanalachsmodulator (1) nach Anspruch 2, wobei die zweite Redundanzventilanordnung (16) ein zweites Redundanz-Relaisventil (33) aufweist.

6. Elektropneumatischer Zweikanalachsmodulator (1) nach Anspruch 5, wobei die zweite Redundanzventilanordnung (16) ein mit dem zweiten Redundanzanschluss (17) verbundenes zweites elektropneumatisches Redundanzventil (32) aufweist.

7. Elektropneumatischer Zweikanalachsmodulator (1) nach Anspruch 1, wobei das erste Redundanz-Relaisventil (31) einen mit dem zweiten Vorratsanschluss (4) verbundenen ersten Redundanz-Relaisventil-Vorratsanschluss (31.1), einen mit einer Entlüftung (7) verbundenen ersten Redundanz-Relaisventil-Entlüftungsanschluss (31.2), einen mit dem Vorderachskanalanschluss (6) verbindbaren ersten Redundanz-Relaisventil-Arbeitsanschluss (31.3) und einen mit dem ersten elektropneumatischen Redundanzventil (30) verbundenen ersten Redundanz-Relaisventil-Steueranschluss (31.4) aufweist.

8. Elektropneumatischer Zweikanalachsmodulator (1) nach Anspruch 6, wobei das zweite Redundanz-Relaisventil (33) einen mit dem ersten Vorratsanschluss (2) verbundenen zweiten Redundanz-Relaisventil-Vorratsanschluss (33.1), einen mit einer Entlüftung (7) verbundenen zweiten Redundanz-Relaisventil-Entlüftungsanschluss (33.2), einen mit dem Hinterachskanalanschluss (8) verbindbaren zweiten Redundanz-Relaisventil-Arbeitsanschluss (33.3) und einen mit dem ersten elektropneumatische Redundanzventil (30) oder dem zweiten elektropneumatische Redundanzventil (32) verbundenen zweiten Redundanz-Relaisventil-Steueranschluss (33.4) aufweist.

9. Elektropneumatischer Zweikanalachsmodulator (1) nach Anspruch 4, wobei
die elektropneumatische Vorderachsventilanordnung (10) eine mit dem ersten Vorratsanschluss (2) verbundene pneumatische Vorderachs-Hauptventilanordnung (40) aufweist, die den ersten Vorderachssteuerdruck (pVS1) empfängt und dazu ausgebildet ist, basierend auf dem empfangenen ersten Vorderachssteuerdruck (pVS1) den Vorderachsbremsdruck (pVA) an dem Vorderachskanalanschluss (6) auszusteuern, und wobei
die elektropneumatische Hinterachsventilanordnung (12) eine mit dem zweiten Vorratsanschluss (4) verbundene pneumatische Hinterachs-Hauptventilanordnung (42) aufweist, die den ersten Hinterachssteuerdruck (pHS1) empfängt und dazu ausgebildet ist, basierend auf dem empfangenen ersten Hinterachssteuerdruck (pHS1) den Hinterachsbremsdruck (pHA) an dem Hinterachskanalanschluss (8) auszusteuern.

10. Elektropneumatischer Zweikanalachsmodulator (1) nach Anspruch 9 und 1, wobei die Vorderachs-Hauptventilanordnung (40) mit dem ersten Redundanz-Relaisventil (31) zum Entlüften des Vorderachskanalanschlusses (6) verbunden ist.

11. Elektropneumatischer Zweikanalachsmodulator (1) nach Anspruch 9 und 5, wobei die Hinterachs-Hauptventilanordnung (42) mit dem zweiten Redundanz-Relaisventil (33) zum Entlüften des Hinterachskanalanschlusses (8) verbunden ist.

12. Elektropneumatischer Zweikanalachsmodulator (1) nach Anspruch 9, wobei die pneumatische Vorderachs-Hauptventilanordnung (40)
ein mit dem ersten Vorratsanschluss (2) und dem Vorderachskanalanschluss (6) verbundenes Vorderachs-Belüftungs-Hauptventil (44) und
ein mit einer Entlüftung (7) verbindbares und dem Vorderachskanalanschluss (6) verbundenes Vorderachs-Entlüftungs-Hauptventil (45) aufweist.

13. Elektropneumatischer Zweikanalachsmodulator (1) nach Anspruch 9, wobei die pneumatische Hinterachs-Hauptventilanordnung (42)
ein mit dem zweiten Vorratsanschluss (4) und dem Hinterachskanalanschluss (8) verbundenes Hinterachs-Belüftungs-Hauptventil (46) und
ein mit einer Entlüftung (7) verbundenes oder verbindbares und dem Hinterachskanalanschluss (8) verbundenes Hinterachs-Entlüftungs-Hauptventil (47) aufweist.

14. Elektropneumatischer Zweikanalachsmodulator (1) nach Anspruch 7, 10 und 12, wobei das Vorderachs-Entlüftungs-Hauptventil (45) mit dem ersten Redundanz-Relaisventil-Arbeitsanschluss (31.3) verbunden ist.

15. Elektropneumatischer Zweikanalachsmodulator (1) nach Anspruch 8, 11 und 13, wobei das Hinterachs-Entlüftungs-Hauptventil (47) mit dem zweiten Redundanz-Relaisventil-Arbeitsanschluss (33.3) verbunden ist.

16. Elektropneumatischer Zweikanalachsmodulator (1) nach Anspruch 9, wobei die pneumatische Vorderachs-Hauptventilanordnung (40) ein Vorderachs-Relaisventil (50), und die pneumatische Hinterachs-Hauptventilanordnung (42) ein Hinterachs-Relaisventil (52) aufweist.

17. Elektropneumatischer Zweikanalachsmodulator (1) nach Anspruch 7 und 16, wobei das Vorderachs-Relaisventil (50) einen mit dem ersten Vorratsanschluss (2) verbundenen Vorderachs-Relaisventil-Vorratsanschluss (50.1), einen mit dem ersten Redundanz-Relaisventil-Arbeitsanschluss (31.3) verbundenen Vorderachs-Relaisventil-Entlüftungsanschluss (50.2), einen mit dem Vorderachskanalanschluss (6) verbundenen Vorderachs-Relaisventil-Arbeitsanschluss (50.3) und einen mit der Vorderachs-Vorsteuereinheit (18) verbundenen Vorderachs-Relaisventil-Steueranschluss (50.4) aufweist.

18. Elektropneumatischer Zweikanalachsmodulator (1) nach Anspruch 8 und 16, wobei das Hinterachs-Relaisventil (52) einen mit dem zweiten Vorratsanschluss (4) verbundenen Hinterachs-Relaisventil-Vorratsanschluss (52.1), einen mit dem zweiten Redundanz-Relaisventil-Arbeitsanschluss (33.3) verbundenen Hinterachs-Relaisventil-Entlüftungsanschluss (52.2), einen mit dem Hinterachskanalanschluss (8) verbundenen Hinterachs-Relaisventil-Arbeitsanschluss (52.3) und einen mit der Hinterachs-Vorsteuereinheit (20) verbundenen Hinterachs-Relaisventil-Steueranschluss (52.4) aufweist.

19. Elektropneumatischer Zweikanalachsmodulator (1) nach Anspruch 1 und 7, wobei das erste elektropneumatische Redundanzventil (30) einen mit dem ersten Redundanzanschluss (15) verbundenen ersten Redundanzventilanschluss (30.1), einen mit dem ersten Redundanz-Relaisventil-Steueranschluss (31.4) verbundenen zweiten Redundanzventilanschluss (30.2) und einen mit einer Entlüftung (7) verbundenen dritten Redundanzventilanschluss (30.3) auf.

20. Elektropneumatischer Zweikanalachsmodulator (1) nach Anspruch 19 und 8, wobei der zweite Redundanzventilanschluss (30.2) auch mit dem zweiten Redundanz-Relaisventil-Steueranschluss (33.4) verbunden ist.

21. Elektropneumatischer Zweikanalachsmodulator (1) nach Anspruch 6 und 8, wobei das zweite elektropneumatische Redundanzventil (32) einen mit dem zweiten Redundanzanschluss (17) verbundenen vierten Redundanzventilanschluss (32.2), einen mit dem zweiten Redundanz-Relaisventil-Steueranschluss (33.4) verbundenen fünften Redundanzventilanschluss (32.1) und einen mit einer Entlüftung (7) verbundenen sechsten Redundanzventilanschluss (32.3) auf.

22. Elektropneumatischer Zweikanalachsmodulator (1) nach einem der vorstehenden Ansprüche, aufweisend eine elektrische Steuereinheit (ECU) mit einem elektrischen Anschluss (60) zum Empfangen von Bremssignalen (SB) und zum Bereitstellen entsprechender Schaltsignale (S1, S2, S3, S4) wenigstens an die elektropneumatische Vorderachsventilanordnung (10) und die elektropneumatische Hinterachsventilanordnung (12).

23. Elektropneumatischer Zweikanalachsmodulator (1) nach einem der vorstehenden Ansprüche, aufweisend einen ersten Drucksensor (62), der dazu vorgesehen ist, den Vorderachsbremsdruck (pVA) zu erfassen und ein entsprechendes Vorderachsdrucksignal (SVD) bereitzustellen, und einen zweiten Drucksensor (63), der dazu vorgesehen ist, den Hinterachsbremsdruck (pHA) zu erfassen und ein entsprechendes Hinterachsdrucksignal (SHD) bereitzustellen.

## Claims

1. Electropneumatic two-channel axle modulator (1) for commercial vehicles, comprising
a first supply connection (2) for connecting a first compressed air supply (3) and a second supply connection (4) for connecting a second compressed air supply (5);
a front axle channel connection (6);
a rear axle channel connection (8);
an electropneumatic front axle valve arrangement (10) connected to the first supply connection (2) for controlling a front axle brake pressure (pVA) at the front axle channel connection (6);
an electropneumatic rear axle valve arrangement (12) connected to the second supply connection (4) for controlling a rear axle brake pressure (pHA) at the rear axle channel connection (8);
**characterized by**
a first redundancy valve arrangement (14) connected to the second supply connection (4) for controlling a redundant front axle brake pressure (pVAR) at the front axle channel connection (6), and
a first redundancy connection (15) for receiving a first redundancy pressure (pR1) connected to at least the first redundancy valve arrangement (14),
the first redundancy valve arrangement (14) having a first electropneumatic redundancy valve (30) connected to the first redundancy connection (15) and a first redundancy relay valve (31).

2. Electropneumatic two-channel axle modulator (1) according to claim 1, comprising a second redundancy valve arrangement (16) connected to the first supply connection (2) for controlling a redundant rear axle brake pressure (pHAR) at the rear axle channel connection (8).

3. Electropneumatic two-channel axle modulator (1) according to claim 2, comprising a second redundancy connection (17) for receiving a second redundancy pressure (pR2) connected to the second redundancy valve arrangement (16).

4. Electropneumatic two-channel axle modulator (1) according to any of the preceding claims, wherein
the electropneumatic front axle valve arrangement (10) comprises a front axle pilot control unit (18) having a front axle inlet valve (22) for controlling a first front axle control pressure (pVS1) and a front axle outlet valve (24), and
the electropneumatic rear axle valve arrangement (12) comprises a rear axle pilot control unit (20) having a rear axle inlet valve (26) for controlling a first rear axle control pressure (pHS1) and a rear axle outlet valve (28).

5. Electropneumatic two-channel axle modulator (1) according to claim 2, wherein the second redundancy valve arrangement (16) comprises a second redundancy relay valve (33).

6. Electropneumatic two-channel axle modulator (1) according to claim 5, wherein the second redundancy valve arrangement (16) comprises a second electropneumatic redundancy valve (32) connected to the second redundancy connection (17).

7. Electropneumatic two-channel axle modulator (1) according to claim 1, wherein the first redundancy relay valve (31) comprises a first redundancy relay valve supply connection (31.1) connected to the second supply connection (4), a first redundancy relay valve venting connection (31.2) connected to a vent (7), a first redundancy relay valve working connection (31.3) connectable to the front axle channel connection (6) and a first redundancy relay valve control connection (31.4) connected to the first electropneumatic redundancy valve (30).

8. Electropneumatic two-channel axle modulator (1) according to claim 6, wherein the second redundancy relay valve (33) comprises a second redundancy relay valve supply connection (33.1) connected to the first supply connection (2), a second redundancy relay valve venting connection (33.2) connected to a vent (7), a second redundancy relay valve working connection (33.3) connectable to the rear axle channel connection (8) and a second redundancy relay valve control connection (33.4) connected to the first electropneumatic redundancy valve (30) or the second electropneumatic redundancy valve (32).

9. Electropneumatic two-channel axle modulator (1) according to claim 4, wherein
the electropneumatic front axle valve arrangement (10) comprises a pneumatic front axle main valve arrangement (40) connected to the first supply connection (2), which pneumatic front axle main valve arrangement receives the first front axle control pressure (pVS1) and is designed to control the front axle brake pressure (pVA) at the front axle channel connection (6) based on the received first front axle control pressure (pVS1), and wherein
the electropneumatic rear axle valve arrangement (12) comprises a pneumatic rear axle main valve arrangement (42) connected to the second supply connection (4), which pneumatic rear axle main valve arrangement receives the first rear axle control pressure (pHS1) and is designed to control the rear axle brake pressure (pHA) at the rear axle channel connection (8) based on the received first rear axle control pressure (pHS1).

10. Electropneumatic two-channel axle modulator (1) according to claims 9 and 1, wherein the front axle main valve arrangement (40) is connected to the first redundancy relay valve (31) for venting the front axle channel connection (6).

11. Electropneumatic two-channel axle modulator (1) according to claims 9 and 5, wherein the rear axle main valve arrangement (42) is connected to the second redundancy relay valve (33) for venting the rear axle channel connection (8).

12. Electropneumatic two-channel axle modulator (1) according to claim 9, wherein the pneumatic front axle main valve arrangement (40) comprises
a front axle ventilation main valve (44) connected to the first supply connection (2) and the front axle channel connection (6), and
a front axle vent main valve (45) connectable to a vent (7) and connected to the front axle channel connection (6).

13. Electropneumatic two-channel axle modulator (1) according to claim 9, wherein the pneumatic rear axle main valve arrangement (42) comprises
a rear axle ventilation main valve (46) connected to the second supply connection (4) and the rear axle channel connection (8), and
a rear axle vent main valve (47) connected or connectable to a vent (7) and connected to the rear axle channel connection (8).

14. Electropneumatic two-channel axle modulator (1) according to claims 7, 10 and 12, wherein the front axle vent main valve (45) is connected to the first redundancy relay valve working connection (31.3).

15. Electropneumatic two-channel axle modulator (1) according to claims 8, 11 and 13, wherein the rear axle vent main valve (47) is connected to the second redundancy relay valve working connection (33.3).

16. Electropneumatic two-channel axle modulator (1) according to claim 9, wherein the pneumatic front axle main valve arrangement (40) comprises a front axle relay valve (50), and the pneumatic rear axle main valve arrangement (42) comprises a rear axle relay valve (52).

17. Electropneumatic two-channel axle modulator (1) according to claims 7 and 16, wherein the front axle relay valve (50) comprises a front axle relay valve supply connection (50.1) connected to the first supply connection (2), a front axle relay valve vent connection (50.2) connected to the first redundancy relay valve working connection (31.3), a front axle relay valve working connection (50.3) connected to the front axle channel connection (6), and a front axle relay valve control connection (50.4) connected to the front axle pilot control unit (18).

18. Electropneumatic two-channel axle modulator (1) according to claims 8 and 16, wherein the rear axle relay valve (52) comprises a rear axle relay valve supply connection (52.1) connected to the second supply connection (4), a rear axle relay valve vent connection (52.2) connected to the second redundancy relay valve working connection (33.3), a rear axle relay valve working connection (52.3) connected to the rear axle channel connection (8) and a rear axle relay valve control connection (52.4) connected to the rear axle pilot control unit (20).

19. Electropneumatic two-channel axle modulator (1) according to claims 1 and 7, wherein the first electropneumatic redundancy valve (30) comprises a first redundancy valve connection (30.1) connected to the first redundancy connection (15), a second redundancy valve connection (30.2) connected to the first redundancy relay valve control connection (31.4) and a third redundancy valve connection (30.3) connected to a vent (7).

20. Electropneumatic two-channel axle modulator (1) according to claims 19 and 8, wherein the second redundancy valve connection (30.2) is also connected to the second redundancy relay valve control connection (33.4).

21. Electropneumatic two-channel axle modulator (1) according to claims 6 and 8, wherein the second electropneumatic redundancy valve (32) comprises a fourth redundancy valve connection (32.2) connected to the second redundancy connection (17), a fifth redundancy valve connection (32.1) connected to the second redundancy relay valve control connection (33.4) and a sixth redundancy valve connection (32.3) connected to a vent (7).

22. Electropneumatic two-channel axle modulator (1) according to any of the preceding claims, comprising an electrical control unit (ECU) which comprises an electrical connection (60) for receiving brake signals (SB) and for providing corresponding switching signals (S1, S2, S3, S4) at least to the electropneumatic front axle valve arrangement (10) and the electropneumatic rear axle valve arrangement (12).

23. Electropneumatic two-channel axle modulator (1) according to any of the preceding claims, comprising a first pressure sensor (62) provided to detect the front axle brake pressure (pVA) and to provide a corresponding front axle pressure signal (SVD), and a second pressure sensor (63) provided to detect the rear axle brake pressure (pHA) and provide a corresponding rear axle pressure signal (SHD).

## Revendications

1. Modulateur d'essieu électropneumatique à deux canaux (1) pour des véhicules utilitaires, comportant
un premier raccord de réserve (2) pour le raccordement d'une première réserve d'air comprimé (3) et un second raccord de réserve (4) pour le raccordement d'une seconde réserve d'air comprimé (5) ;
un raccord de canal d'essieu avant (6) ;
un raccord de canal d'essieu arrière (8) ;
un agencement de soupapes d'essieu avant électropneumatique (10), qui est relié au premier raccord de réserve (2) pour la commande d'une pression de freinage d'essieu avant (pVA) au niveau du raccord de canal d'essieu avant (6) ;
un agencement de soupapes d'essieu arrière électropneumatique (12), qui est relié au second raccord de réserve (4) pour la commande d'une pression de freinage d'essieu arrière (pHA) au niveau du raccord de canal d'essieu arrière (8) ;
**caractérisé par**
un premier agencement de soupapes de redondance (14), qui est relié au second raccord de réserve (4) pour la commande d'une pression de freinage d'essieu avant redondante (pVAR) au niveau du raccord de canal d'essieu avant (6), et
un premier raccord de redondance (15) pour la réception d'une première pression de redondance (pR1), qui est relié au moins au premier agencement de soupapes de redondance (14),
dans lequel le premier agencement de soupapes de redondance (14) présente une première soupape de redondance électropneumatique (30) reliée au premier raccord de redondance (15) et une première soupape de relais de redondance (31).

2. Modulateur d'essieu électropneumatique à deux canaux (1) selon la revendication 1, présentant un second agencement de soupapes de redondance (16), qui est relié au premier raccord de réserve (2) pour la commande d'une pression de freinage d'essieu arrière redondante (pHAR) au niveau du raccord de canal d'essieu arrière (8).

3. Modulateur d'essieu électropneumatique à deux canaux (1) selon la revendication 2, présentant un second raccord de redondance (17) pour la réception d'une seconde pression de redondance (pR2), qui est relié au second agencement de soupapes de redondance (16).

4. Modulateur d'essieu électropneumatique à deux canaux (1) selon l'une des revendications précédentes, dans lequel
l'agencement de soupapes d'essieu avant électropneumatique (10) présente une unité pilote d'essieu avant (18) comportant une soupape d'admission d'essieu avant (22) pour la commande d'une première pression de commande d'essieu avant (pVS1) et une soupape d'échappement d'essieu avant (24), et
l'agencement de soupapes d'essieu arrière électropneumatique (12) présente une unité pilote d'essieu arrière (20) comportant une soupape d'admission d'essieu arrière (26) pour la commande d'une première pression de commande d'essieu arrière (pHS1) et une soupape d'échappement d'essieu arrière (28).

5. Modulateur d'essieu électropneumatique à deux canaux (1) selon la revendication 2, dans lequel le second agencement de soupapes de redondance (16) présente une seconde soupape de relais de redondance (33).

6. Modulateur d'essieu électropneumatique à deux canaux (1) selon la revendication 5, dans lequel le second agencement de soupapes de redondance (16) présente une seconde soupape de redondance électropneumatique (32) reliée au second raccord de redondance (17).

7. Modulateur d'essieu électropneumatique à deux canaux (1) selon la revendication 1, dans lequel la première soupape de relais de redondance (31) présente un premier raccord de réserve de soupape de relais de redondance (31.1) relié au second raccord de réserve (4), un raccord de purge de soupape de relais de redondance (31.2) relié à une purge (7), un premier raccord de travail de soupape de relais de redondance (31.3) pouvant être relié au raccord de canal d'essieu avant (6) et un premier raccord de commande de soupape de relais de redondance (31.4) relié à la première soupape de redondance électropneumatique (30).

8. Modulateur d'essieu électropneumatique à deux canaux (1) selon la revendication 6, dans lequel la seconde soupape de relais de redondance (33) présente un second raccord de réserve de soupape de relais de redondance (33.1) relié au premier raccord de réserve (2), un second raccord de purge de soupape de relais de redondance (33.2) relié à une purge (7), un second raccord de travail de soupape de relais de redondance (33.3) pouvant être relié au raccord de canal d'essieu arrière (8) et un second raccord de commande de soupape de relais de redondance (33.4) relié à la première soupape de redondance électropneumatique (30) ou à la seconde soupape de redondance électropneumatique (32).

9. Modulateur d'essieu électropneumatique à deux canaux (1) selon la revendication 4, dans lequel
l'agencement de soupapes d'essieu avant électropneumatique (10) présente un agencement de soupapes principales d'essieu avant (40) pneumatique qui est relié au premier raccord de réserve (2), reçoit la première pression de commande d'essieu avant (pVS1) et est conçu pour commander, sur la base de la première pression de commande d'essieu avant (pVS1) reçue, la pression de freinage d'essieu avant (pVA) au niveau du raccord de canal d'essieu avant (6), et dans lequel
l'agencement de soupapes d'essieu arrière électropneumatique (12) présente un agencement de soupapes principales d'essieu arrière (42) pneumatique qui est relié au second raccord de réserve (4), reçoit la première pression de commande d'essieu arrière (pHS1) et est conçu pour commander, sur la base de la première pression de commande d'essieu arrière (pHS1) reçue, la pression de freinage d'essieu arrière (pHA) au niveau du raccord de canal d'essieu arrière (8).

10. Modulateur d'essieu électropneumatique à deux canaux (1) selon les revendications 9 et 1, dans lequel l'agencement de soupapes principales d'essieu avant (40) est relié à la première soupape de relais de redondance (31) pour la purge du raccord de canal d'essieu avant (6).

11. Modulateur d'essieu électropneumatique à deux canaux (1) selon les revendications 9 et 5, dans lequel l'agencement de soupapes principales d'essieu arrière (42) est relié à la seconde soupape de relais de redondance (33) pour la purge du raccord de canal d'essieu arrière (8).

12. Modulateur d'essieu électropneumatique à deux canaux (1) selon la revendication 9, dans lequel l'agencement de soupapes principales d'essieu avant (40) pneumatique présente
une soupape principale de ventilation d'essieu avant (44) reliée au premier raccord de réserve (2) et au raccord de canal d'essieu avant (6) et
une soupape principale de purge d'essieu avant (45) pouvant être reliée à une purge (7) et reliée au raccord de canal d'essieu avant (6).

13. Modulateur d'essieu électropneumatique à deux canaux (1) selon la revendication 9, dans lequel l'agencement de soupapes principales d'essieu arrière (42) pneumatique présente
une soupape principale de ventilation d'essieu arrière (46) reliée au second raccord de réserve (4) et au raccord de canal d'essieu arrière (8) et
une soupape principale de purge d'essieu arrière (47) reliée ou pouvant être reliée à une purge (7) et reliée au raccord de canal d'essieu arrière (8).

14. Modulateur d'essieu électropneumatique à deux canaux (1) selon les revendications 7, 10 et 12, dans lequel la soupape principale de purge d'essieu avant (45) est reliée au premier raccord de travail de soupape de relais de redondance (31.3).

15. Modulateur d'essieu électropneumatique à deux canaux (1) selon les revendications 8, 11 et 13, dans lequel la soupape principale de purge d'essieu arrière (47) est reliée au second raccord de travail de soupape de relais de redondance (33.3).

16. Modulateur d'essieu électropneumatique à deux canaux (1) selon la revendication 9, dans lequel l'agencement de soupapes principales d'essieu avant (40) pneumatique présente une soupape de relais d'essieu avant (50) et l'agencement de soupapes principales d'essieu arrière (42) pneumatique présente une soupape de relais d'essieu arrière (52).

17. Modulateur d'essieu électropneumatique à deux canaux (1) selon les revendications 7 et 16, dans lequel la soupape de relais d'essieu avant (50) présente un raccord de réserve de soupape de relais d'essieu avant (50.1) relié au premier raccord de réserve (2), un raccord de purge de soupape de relais d'essieu avant (50.2) relié au premier raccord de travail de soupape de relais de redondance (31.3), un raccord de travail de soupape de relais d'essieu avant (50.3) relié au raccord de canal d'essieu avant (6) et un raccord de commande de soupape de relais d'essieu avant (50.4) relié à l'unité pilote d'essieu avant (18).

18. Modulateur d'essieu électropneumatique à deux canaux (1) selon les revendications 8 et 16, dans lequel la soupape de relais d'essieu arrière (52) présente un raccord de réserve de soupape de relais d'essieu arrière (52.1) relié au second raccord de réserve (4), un raccord de purge de soupape de relais d'essieu arrière (52.2) relié au second raccord de travail de soupape de relais de redondance (33.3), un raccord de travail de soupape de relais d'essieu arrière (52.3) relié au raccord de canal d'essieu arrière (8) et un raccord de commande de soupape de relais d'essieu arrière (52.4) relié à l'unité pilote d'essieu arrière (20).

19. Modulateur d'essieu électropneumatique à deux canaux (1) selon les revendications 1 et 7, dans lequel la première soupape de redondance électropneumatique (30) un premier raccord de soupape de redondance (30.1) relié au premier raccord de redondance (15), un deuxième raccord de soupape de redondance (30.2) relié au premier raccord de commande de soupape de relais de redondance (31.4) et un troisième raccord de soupape de redondance (30.3) relié à une purge (7).

20. Modulateur d'essieu électropneumatique à deux canaux (1) selon les revendications 19 et 8, dans lequel le deuxième raccord de soupape de redondance (30.2) est également relié au second raccord de commande de soupape de relais de redondance (33.4).

21. Modulateur d'essieu électropneumatique à deux canaux (1) selon les revendications 6 et 8, dans lequel la seconde soupape de redondance électropneumatique (32) un quatrième raccord de soupape de redondance (32.2) relié au second raccord de redondance (17), un cinquième raccord de soupape de redondance (32.1) relié au second raccord de commande de soupape de relais de redondance (33.4) et un sixième raccord de soupape de redondance (32.3) relié à une purge (7).

22. Modulateur d'essieu électropneumatique à deux canaux (1) selon l'une des revendications précédentes, présentant une unité de commande électrique (ECU) comportant un raccord électrique (60) pour la réception de signaux de freinage (SB) et pour la fourniture de signaux de commutation (S1, S2, S3, S4) correspondants au moins à l'agencement de soupapes d'essieu avant électropneumatique (10) et à l'agencement de soupapes d'essieu arrière électropneumatique (12).

23. Modulateur d'essieu électropneumatique à deux canaux (1) selon l'une des revendications précédentes, présentant un premier capteur de pression (62), qui est prévu pour détecter la pression de freinage d'essieu avant (pVA) et pour fournir un signal de pression d'essieu avant (SVD) correspondant, et un second capteur de pression (63), qui est prévu pour détecter la pression de freinage d'essieu arrière (pHA) et pour fournir un signal de pression d'essieu arrière (SHD) correspondant.
